# EUROPÄISCHE PATENTANMELDUNG

(11) **EP 4 023 879 A1**
(43) Veröffentlichungstag der Anmeldung: **06.07.2022**
(21) Anmeldenummer: 22150363.4
(22) Anmeldetag: 05.01.2022
(51) Int. Cl.: F03D 9/19, F03D 9/25, A62C 3/06, F03D 80/80, F03D 80/00, H02J 15/00, A62C 99/00, A62C 3/16

(54) **FLUID- UND/ODER ENERGIEBEREITSTELLUNGSEINRICHTUNG SOWIE VERFAHREN ZUM BETREIBEN EINER FLUID- UND/ODER ENERGIEBEREITSTELLUNGSEINRICHTUNG**

(30) Priorität: 05.01.2021 DE 102021200035
(71) Anmelder: Schierack, Horst, 53343 Wachtberg (DE)
(72) Erfinder: Schierack, Horst, 53343 Wachtberg (DE); Holmig, Rainer, 04808 Wurzen (DE)
(74) Vertreter: Dietz, Christopher Friedrich

(57) **Zusammenfassung**

Die Erfindung betrifft eine Fluid- und/oder Energiebereitstellungseinrichtung, mit einer Windkraftanlage (2) sowie mit einer Fluidspeichervorrichtung (3), wobei die Fluid- und/oder Energiebereitstellungseinrichtung (1) dazu ausgebildet ist, mittels zumindest zeitweise von der Windkraftanlage (2) bereitgestellter Energie Wasser durch Elektrolyse in wenigstens ein Fluid aufzuspalten und das Fluid mittels der Fluidspeichervorrichtung (3) zwischenzuspeichern, wobei die Fluidspeichervorrichtung (3) über eine Tankanordnung (10) für das Fluid verfügt, die einen in einem die Windkraftanlage (2) tragenden Speicherturm (8) ausgebildeten Speichertank (11) aufweist. Dabei ist vorgesehen, dass die Fluid- und/oder Energiebereitstellungseinrichtung (1) über eine Brandschutzeinrichtung (33) verfügt, welche einen Löschgasspeicher (34) für ein Löschgas und eine Ausbringeinrichtung (35) zur Ausbringung des Löschgases aufweist und die Ausbringeinrichtung (35) zur Flutung eines Schutzbereichs (36) der Windkraftanlage (2) mit dem Löschgas und/oder zur Erzeugung eines Löschgasvorhangs um den Schutzbereich (36) der Windkraftanlage (2) vorgesehen und ausgestaltet ist. Der Film betrifft weiterhin ein Verfahren zum Betreiben einer Fluid- und/oder Energiebereitstellungseinrichtung (1).

## Beschreibung

Die Erfindung betrifft eine Fluid- und/oder Energiebereitstellungseinrichtung, mit einer Windkraftanlage sowie mit einer Fluidspeichervorrichtung, wobei die Fluid- und/oder Energiebereitstellungseinrichtung dazu ausgebildet ist, mittels zumindest zeitweise von der Windkraftanlage bereitgestellter Energie Wasser durch Elektrolyse in wenigstens ein Fluid aufzuspalten und das Fluid mittels der Fluidspeichervorrichtung zwischenzuspeichern, wobei die Fluidspeichervorrichtung über eine Tankanordnung für das Fluid verfügt, die einen in einem die Windkraftanlage tragenden Speicherturm ausgebildeten Speichertank aufweist. Die Erfindung betrifft weiterhin ein Verfahren zum Betreiben einer Fluid- und/oder Energiebereitstellungseinrichtung.

Aus dem Stand der Technik ist beispielsweise die Druckschrift WO 2020/016226 A1 bekannt. Diese beschreibt eine Fluidspeichervorrichtung für eine Fluid- und/oder Energiebereitstellungseinrichtung. Diese zeichnet sich durch eine erste Tankanordnung für ein erstes Fluid und eine zweite Tankanordnung für ein zweites Fluid aus, wobei die erste Tankanordnung einen ersten Speichertank in einem mittels einer Gründung verankerten, sich in axialer Richtung bezüglich seiner Längsmittelachse in die Gründung hinein erstreckenden Speicherturm und die zweite Tankanordnung mehrere separat angeordnete zweite Speichertanks aufweist, die in Umfangsrichtung um den Speicherturm verteilt angeordnet, zur Versteifung des Speicherturms an diesem befestigt und sich an der Gründung abstützen und/oder an dieser befestigt sind und/oder mehrfach an dem Speicherturm befestigt sind.

Es ist Aufgabe der Erfindung, eine Fluid- und/oder Energiebereitstellungseinrichtung vorzuschlagen, welche gegenüber bekannten Fluid- und/oder Energiebereitstellungseinrichtungen Vorteile aufweist, insbesondere eine höhere Brandsicherheit aufweist.

Dies wird erfindungsgemäß mit einer Fluid- und/oder Energiebereitstellungseinrichtung mit den Merkmalen des Anspruchs 1 erreicht. Dabei ist vorgesehen, dass die Fluid- und/oder Energiebereitstellungseinrichtung über eine Brandschutzeinrichtung verfügt, welche einen, insbesondere in und/oder an dem Speicherturm angeordneten, Löschgasspeicher für ein Löschgas und eine Ausbringungseinrichtung zur Ausbringung des Löschgases aufweist und die Ausbringeinrichtung zur Flutung eines Schutzbereichs der Windkraftanlage mit dem Löschgas und/oder zur Erzeugung eines Löschgasvorhangs um den Schutzbereich der Windkraftanlage vorgesehen und ausgestaltet ist.

Vorteilhafte Ausgestaltungen mit zweckmäßigen Weiterbildungen der Erfindung sind in den abhängigen Ansprüchen angegeben.

Die Fluid- und/oder Energiebereitstellungseinrichtung dient zur Bereitstellung wenigstens eines Fluids, insbesondere mehrere Fluide, und/oder von Energie, insbesondere von elektrischer Energie. Hierbei wird regenerative Energie, insbesondere solare Energie und/oder Windenergie, zur Erzeugung und nachfolgenden Bereitstellung des wenigstens einen Fluids und/oder zur Bereitstellung von elektrischer Energie herangezogen. Zumindest verfügt die Fluid- und/oder Energiebereitstellungseinrichtung über die Windkraftanlage, mittels welcher die regenerative Energie, insbesondere unmittelbar in Form der elektrischen Energie, zumindest zeitweise bereitgestellt wird.

Zusätzlich zu der Windkraftanlage kann eine Solarnutzungseinrichtung Bestandteil der Fluid- und/oder Energiebereitstellungseinrichtung sein. Auch diese dient bevorzugt dem zumindest zeitweisen Bereitstellen der regenerativen Energie, insbesondere - unmittelbar oder lediglich mittelbar - dem Bereitstellen der elektrischen Energie. Konkret ist es im Rahmen der Fluid- und/oder Energiebereitstellungseinrichtung vorgesehen, die von der Windkraftanlage und/oder der Solarnutzungseinrichtung bereitgestellte regenerative Energie zum Aufspalten von Wasser durch Elektrolyse zu verwenden, sodass Wasserstoff und Sauerstoff anfallen. Die regenerative Energie kann im Übrigen unmittelbar als elektrische Energie vorliegen, beispielsweise im Falle der Windkraftanlage. Alternativ wird sie - falls notwendig - in elektrische Energie umgewandelt. Dies ist kann zum Beispiel für die Solarnutzungseinrichtung der Fall sein, falls diese über einen Solarkollektor verfügt.

Wenigstens eines der bei der Elektrolyse anfallenden Fluide, also Wasserstoff oder Sauerstoff, wird anschließend in der Fluidspeichervorrichtung zwischengespeichert. Das Fluid kann als Gas oder aber in verflüssigter Form zwischengespeichert werden. Beispielsweise wird lediglich der Wasserstoff oder der Sauerstoff zwischengespeichert und das jeweils andere Fluid abgeführt, beispielsweise in die Außenumgebung beziehungsweise die Atmosphäre. Bevorzugt dient die Fluid- und/oder Energiebereitstellungseinrichtung dem Bereitstellen zumindest des Wasserstoffs; in diesem Fall wird der Sauerstoff abgeführt und nicht zwischengespeichert. Besonders bevorzugt werden jedoch sowohl der Wasserstoff als auch der Sauerstoff mittels der Fluidspeichervorrichtung zwischengespeichert.

Grundsätzlich ist es vorgesehen, die von der Windkraftanlage und/oder der Solarnutzungseinrichtung bereitgestellte regenerative Energie zumindest zeitweise zum Aufspalten des Wassers durch Elektrolyse zu verwenden. Zeitweise kann jedoch auch die regenerative Energie unmittelbar in elektrische Energie umgewandelt oder unmittelbar in Form der elektrischen Energie verwendet werden. Anders ausgedrückt ist es beispielsweise vorgesehen, die regenerative Energie entweder unmittelbar in elektrische Energie umzuwandeln oder als solche zu verwenden oder die Energie zum Erzeugen des wenigsten einen Fluids zu nutzen. Selbstverständlich kann es auch vorgesehen sein, die Energie - in Abhängigkeit von ihrer Verfügbarkeit - teilweise zur Bereitstellung der elektrischen Energie und teilweise zum Erzeugen des wenigstens einen Fluids heranzuziehen.

Das wenigstens eine Fluid, welches unter dem Einsatz der regenerativen Energie erzeugt wurde, kann ebenfalls zur Bereitstellung von elektrischer Energie verwendet werden, insbesondere falls momentan keine regenerative Energie oder zu wenig regenerative Energie zur unmittelbaren Bereitstellung der elektrischen Energie verfügbar ist. Beispielsweise ist es vorgesehen, im Falle eines Überschusses von regenerativer Energie diese zumindest teilweise zur Erzeugung des wenigsten einen Fluids zu verwenden. Dieses wird in der Fluidspeichervorrichtung zwischengespeichert, insbesondere bei Überdruck, also einem Druck, der höher ist als ein Umgebungsdruck. Liegt nachfolgend ein Mangel an regenerative Energie vor, kann der Bedarf an elektrischer Energie also nicht oder zumindest nicht allein mittels der regenerativen Energie gedeckt werden, so wird das mindestens eine Fluid der Fluidspeichervorrichtung entnommen und zur zumindest teilweisen oder vollständigen Bereitstellung der elektrischen Energie herangezogen.

Die Fluid- und/oder Energiebereitstellungseinrichtung ist zur Nutzung zumindest einer regenerativen Energiequelle vorgesehen und ausgebildet. Hierzu verfügt sie über eine Einrichtung zur Nutzung von Windkraft, nämlich die Windkraftanlage. Diese dient einer Umwandlung von Windkraft beziehungsweise von Windenergie in elektrische Energie. Hierzu verfügt die Windkraftanlage vorzugsweise über einen Rotor, der wenigstens ein Rotorblatt oder bevorzugt mehrere Rotorblätter aufweist, und über einen antriebstechnisch mit dem Rotor gekoppelten Generator. Die elektrischen Energie kann von der Fluid- und/oder Energiebereitstellungseinrichtung unmittelbar bereitgestellt und/oder zur Umwandlung von Wasser in das wenigstens eine Fluid verwendet werden. Die elektrische Energie stellt insoweit die bereits erwähnte regenerative Energie dar.

Zusätzlich zu der Einrichtung zur Nutzung von Windkraft beziehungsweise der Windkraftanlage kann die Fluid- und/oder Energiebereitstellungseinrichtung über eine Einrichtung zur Nutzung solarer Energie, nämlich eine Solarnutzungseinrichtung, verfügen. In diesem Fall ist die Fluid- und/oder Energiebereitstellungseinrichtung zur Nutzung mehrerer unterschiedlicher regenerativer Energiequellen vorgesehen und ausgestaltet. Die Solarnutzungseinrichtung weist beispielsweise wenigstens einen Solarkollektor, insbesondere einen Parabolkollektor, und/oder mindestens ein Solarmodul auf. Das Solarmodul kann auch als Solarzellenmodul bezeichnet werden.

Der Solarkollektor ist zu Durchströmung mit einem Arbeitsfluid vorgesehen und ausgestaltet. Bei hinreichender Sonneneinstrahlung erwärmt sich das den Solarkollektor durchströmende Arbeitsfluid, nimmt also Wärme auf. Diese Wärme kann nachfolgend zur Erzeugung von elektrischer Energie verwendet werden, welche wiederum unmittelbar bereitgestellt oder zur Umwandlung von Wasser in das mindestens eine Fluid herangezogen werden kann beziehungsweise wird. Das Solarmodul, welches auch als Photovoltaikmodul bezeichnet werden kann, dient hingegen der direkten Umwandlung von solarer Energie in elektrische Energie. Auch diese elektrische Energie kann gemäß den vorstehenden Ausführungen verwendet werden. Zusätzlich oder alternativ wird die vorliegende Wärme zwischengespeichert, nämlich mittels einer geeigneten Energiespeichereinrichtung.

In einer bevorzugten Ausgestaltung der Fluid- und/oder Energiebereitstellungseinrichtung ist es vorgesehen, die von der Windkraftanlage und/oder der Solarnutzungseinrichtung, also insbesondere von dem Solarmodul beziehungsweise Photovoltaikmodul, bereitgestellte regenerative beziehungsweise elektrische Energie in Wärme umzuwandeln und zwischenzuspeichern, insbesondere in derselben Energiespeichereinrichtung wie die Wärme der Solarnutzungseinrichtung. Hierzu ist beispielsweise ein Durchlauferhitzer vorgesehen, mittels welchem die elektrische Energie in Wärme umgewandelt wird, die dann der Energiespeichereinrichtung zugeführt wird. Der Durchlauferhitzer ist bevorzugt ein Druckdurchlauferhitzer. Er kann zum Beispiel an dem Speicherturm und/oder in einem Untergrund, auf welchem der Speicherturm angeordnet ist, vorliegen. Bevorzugt ist der Durchlauferhitzer an einer Außenwand des Speicherturms befestigt, insbesondere an der Tankanordnung beziehungsweise dem Speichertank.

Besonders bevorzugt ist eine Ausgestaltung der Fluid- und/oder Energiebereitstellungseinrichtung, welche zusätzlich zu der Windkraftanlage und der optionalen Solarnutzungseinrichtung eine Brennstoffzelleneinrichtung aufweist, mittels welcher das mindestens eine Fluid in elektrische Energie umgesetzt werden kann. Eine derartige Ausgestaltung ermöglicht ein dauerhaftes bereitstellen von elektrischer Energie. Steht regenerative Energie zur Verfügung, so wird diese in elektrische Energie umgewandelt, welche wiederum zumindest teilweise unmittelbar bereitgestellt und/oder zumindest teilweise zur Umwandlung von Wasser in das mindestens eine Fluid verwendet wird. Das wenigsten seine Fluid wird in der Fluidspeichervorrichtung zwischengespeichert. Steht keine oder nicht hinreichend regenerative Energie zur Verfügung, so wird das wenigstens eine Fluid der Brennstoffzelle zur Erzeugung elektrischer Energie zugeführt. Diese wird anschließend vorzugsweise von der Fluid- und/oder Energiebereitstellungseinrichtung bereitgestellt, insbesondere einem Verbraucher. Das Bereitstellen der mittels der Brennstoffzelle erzeugten elektrischen Energie erfolgt alternativ oder zusätzlich zu zu dem direkten Bereitstellen der mittels der Windkraftanlage und/oder der Solarnutzungseinrichtung erzeugten elektrischen Energie.

Die Fluidspeichervorrichtung ist Bestandteil der Fluid- und/oder Energiebereitstellungseinrichtung. Sie ist kompakt und platzsparend ausgebildet und wird zudem zur Halterung der Windkraftanlage und optional der Solarnutzungseinrichtung herangezogen. Die Fluidspeichervorrichtung verfügt über die zumindest eine Tankanordnung für das wenigstens eine Fluid. Die Tankanordnung ist zur Zwischenspeicherung des Fluids vorgesehen und ausgestaltet. Als das Fluid wird bevorzugt der bei der Elektrolyse anfallende Wasserstoff oder - alternativ - der Sauerstoff verwendet. Die Tankanordnung weist den Speichertank auf, vorzugsweise genau einen Speichertank. Das für das Fluid von der Fluidspeichervorrichtung bereitgestellte Speichervolumen wird also allein mittels des Speichertanks bereitgestellt. Hierbei bleiben eventuelle Leitungen, insbesondere Rohrleitungen oder Schlauchleitungen, zur fluidtechnischen Anbindung des Speichertanks, unberücksichtigt.

Der Speichertank ist beispielsweise zur Aufnahme des wenigstens einen Fluids unter einem Druck von mindestens 100 bar, mindestens 150 bar, mindestens 200 bar, mindestens 250 bar oder mindestens 300 bar ausgebildet, weist also eine entsprechende Druckfestigkeit auf. Der Speichertank liegt in dem Speicherturm vor. Er wird bevorzugt von einer Wand des Speicherturms begrenzt beziehungsweise eingeschlossen. Bevorzugt weist der Speicherturm einen zylindrischen Querschnitt, insbesondere einen kreiszylindrischen Querschnitt, auf. Besonders bevorzugt besteht er zumindest bereichsweise aus Metall, insbesondere setzte er sich aus mindestens einem Metallrohr, bevorzugt mehreren miteinander verbundenen Metallrohren, zusammen. Das Metallrohr beziehungsweise jedes der Metallrohre weist jeweils über seine Längserstreckung einen gleichbleibenden Querschnitt auf, Die Metallrohre sind beispielsweise endseitig mittels eines Deckels verschlossen. Das bedeutet, dass der Speicherturm und dementsprechend der Speichertank der Tankanordnung aus Standardkomponenten auf besonders kostengünstige Art und Weise aufgebaut werden können.

Der Speicherturm dient nicht lediglich einer Unterbringung des Speichertanks, sondern zusätzlich einer Halterung der Windkraftanlage. Die Windkraftanlage ist insoweit an dem Speicherturm und insoweit an der Fluidspeichervorrichtung angeordnet. Der Speicherturm trägt die Windkraftanlage, sodass sich die Windkraftanlage über den Speicherturm an dem Untergrund beziehungsweise an einer Gründung des Speicherturms abstützt. Die Windkraftanlage ist hierzu an dem Speicherturm befestigt, insbesondere an einem dem Untergrund beziehungsweise der Gründung abgewandten Ende des Speicherturms. Bevorzugt ist die Windkraftanlage an einer dem Untergrund beziehungsweise der Gründung abgewandten Stirnseite des Speicherturms angeordnet, insbesondere stützt sie sich an dieser ab. An dem Speicherturm ist insoweit eine Stützanordnung für die Windkraftanlage ausgebildet. Diese dient der Abstützung beziehungsweise Befestigung der Windkraftanlage an dem Speicherturm. Beispielsweise ist die Stützanordnung an einem konisch ausgebildeten Abschlusselement des Speicherturms angeordnet beziehungsweise befestigt.

In einer weiteren bevorzugten Ausgestaltung der Fluid- und/oder Energiebereitstellungseinrichtung ist vorgesehen, dass an dem Speicherturm eine den Speicherturm zumindest bereichsweise umgreifende Trageanordnung für die Solarnutzungseinrichtung ausgebildet ist. Die Traganordnung umgreift den Speicherturm beispielsweise nach Art einer Manschette. Vorzugsweise sind über die Traganordnung mindestens zwei Paneele für die Anordnung von Solarkollektoren und/oder Solarmodulen an dem Speicherturm befestigt. Somit kann eine große effektive Fläche zur Nutzung der solaren Energie bereitgestellt werden. Durch eine derartige Ausgestaltung wird ein sehr hoher Integrationsgrad der Fluid- und/oder Energiebereitstellungseinrichtung erzielt.

Die Integration der Windkraftanlage und der Fluidspeichervorrichtung und insbesondere die Anordnung des Speichertanks für das Fluid in dem die Windkraftanlage tragenden Speicherturms erlaubt zum einen den bereits beschriebenen hohen Integrationsgrad. Zum anderen birgt er jedoch ein gewisses Brandrisiko, nämlich im Falle eines Lecks des Speichertanks. Gelangt das im Falle eines solchen Lecks aus dem Speichertank ausströmende Fluid in den Schutzbereich der Windkraftanlage, mit welcher elektrischer Strom erzeugt wird, so kann es beispielsweise aufgrund von Funkenbildung und/oder hoher Temperatur der Windkraftanlage zu einer Entzündung des Fluids kommen, insbesondere zusammen mit in der Außenumgebung der Fluid- und/oder Energiebereitstellungseinrichtung vorliegendem Sauerstoff.

Aus diesem Grund verfügt die Fluid- und/oder Energiebereitstellungseinrichtung über die Brandschutzeinrichtung. Diese wiederum weist zumindest den Löschgasspeicher und die Ausbringeinrichtung auf. Der Löschgasspeicher dient einer Zwischenspeicherung des Löschgases, welches zumindest zeitweise mittels der Ausbringeinrichtung ausgebracht wird. Als Löschgas wird besonders bevorzugt ein Inertgas verwendet, bevorzugt Stickstoff, oder ein Edelgas, wie beispielsweise Helium, Neon, Argon, Krypton, Xenon oder dergleichen. Zumindest zeitweise wird mittels der Ausbringeinrichtung der Schutzbereich der Windkraftanlage mit dem Löschgas geflutet und/oder ein Löschgasvorhang um den Schutzbereich der Windkraftanlage erzeugt.

Durch das Fluten der Windkraftanlage mit dem Löschgas wird aus dem Schutzbereich eventuell dort vorliegender Sauerstoff und/oder das Fluid verdrängt, sodass es nicht zur Bildung eines zündfähigen Gemischs aus dem Fluid und dem Sauerstoff kommen kann. Besonders bevorzugt wird bei dem Fluten der Windkraftanlage das Löschgas unmittelbar in ein Maschinengehäuse der Windkraftanlage eingeleitet, in welchem zumindest ein Generator der Windkraftanlage angeordnet ist. Das Maschinengehäuse umfasst in diesem Fall den Schutzbereich beziehungsweise der Schutzbereich liegt in dem Maschinengehäuse vor beziehungsweise ist von diesem eingefasst. In anderen Worten bildet ein von dem Maschinengehäuse begrenzter Innenraum oder zumindest ein Teil von diesem den Schutzbereich.

Zusätzlich oder alternativ zu dem Fluten der Windkraftanlage wird mittels der Ausbringeinrichtung der Löschgasvorhang erzeugt. Der Löschgasvorhang wird mittels der Ausbringeinrichtung derart ausgebildet, dass er verhindert, dass das aus dem Speichertank austretende Fluid in den Schutzbereich der Windkraftanlage gelangt, um welchen herum der Löschgasvorhang erzeugt ist. Der Löschgasvorhang wird hierzu insbesondere zwischen dem Speichertank und der Windkraftanlage erzeugt. Der Löschgasvorhang wird derart erzeugt, dass er ein Hindurchtreten des Fluids in Richtung der Windkraftanlage gänzlich verhindert oder zumindest deutlich abschwächt, nämlich derart, dass in dem Schutzbereich der Windkraftanlage kein zündfähiges Gemisch aus Fluid und Sauerstoff entstehen kann. Insbesondere wird der Löschvorhang derart erzeugt, dass er das Fluid um dem Schutzbereich herumführt.

Zusätzlich oder alternativ wird der Löschgasvorhang derart erzeugt, dass er den Speicherturm zumindest bereichsweise kühlt. Insbesondere dient der Löschgasvorhang dem Kühlen des Speichertanks beziehungsweise des in dem Speichertank zwischengespeicherten Fluids. Vorzugsweise wird der Löschgasvorhang erzeugt, sobald und/oder solange eine Temperatur des Speicherturms, insbesondere eine Temperatur des Speichertanks oder des in dem Speichertank zwischengespeicherten Fluids, einen Schwellenwert überschreitet, also größer ist als der Schwellenwert. Insbesondere wird der Löschgasvorhang derart erzeugt, dass das Löschgas außen an dem Speicherturm herunterläuft. Dies ist besonders vorteilhaft, falls eine Außenhaut des Speichertanks von einer Außenhülle des Speicherturms gebildet ist, was optional der Fall sein kann. Das Erzeugen der Löschgasvorgangs erfolgt besonders bevorzugt derart, dass das Löschgas bei seinem Ausbringen mittels der Ausbringeinrichtung flüssig ist und erst aufgrund des Kühlens des Speicherturms, insbesondere des Speichertanks und/oder des Fluids, verdampft. Hierdurch wird die Verdampfungsenthalpie des Löschgases besonders effektiv genutzt.

Es kann vorgesehen sein, dass in einer ersten Betriebsart das Löschgas zum Erzeugen des Löschgasvorhangs bereits gasförmig mittels der Ausbringeinrichtung ausgebracht wird, nämlich insbesondere um zu verhindern, dass das aus dem Speichertank austretende Fluid in den Schutzbereich gelangt. In einer zweiten Betriebsart wird das Löschgas zum Erzeugen des Löschgasvorhangs hingegen in flüssiger Form mittels der Ausbringeinrichtung ausgebracht, nämlich zum Kühlen des Speicherturms. Die erste Betriebsart wird insbesondere angewandt, falls Fluid aus dem Speichertank austritt. Die zweite Betriebsart kommt hingegen vorzugsweise zum Einsatz, besonders bevorzugt nur dann, falls kein derartiges Austreten vorliegt, sondern das Kühlen des Speicherturms erfolgen soll. Dies ist insbesondere der Fall, falls die benannte Temperatur den Schwellenwert überschreitet beziehungsweise überschritten hat.

Zusätzlich oder alternativ ist es vorgesehen, das Löschgas zum Kühlen des Speicherturms einem Wärmetauscher zuzuführen, der in dem Speicherturm angeordnet ist. Vorzugsweise ist der Wärmetauscher wärmeübertragend mit dem Speichertank beziehungsweise dem Fluid verbunden. Beispielsweise ist der Wärmetauscher in einer den Speichertank begrenzenden Wand ausgebildet, insbesondere in der Außenhaut des Speichertanks und/oder der Außenhülle des Speicherturms. Zusätzlich oder alternativ ist der Wärmetauscher zumindest bereichsweise in dem Speichertank angeordnet. In jedem Fall steht der Wärmetauscher bevorzugt in unmittelbarem Fluidkontakt mit dem Fluid, sodass Wärme von dem Fluid auf das den Wärmetauscher durchströmende Löschgas übergeht. Insbesondere wird das Löschgas dem Wärmetauscher derart zugeführt und/oder ist der Wärmetauscher derart ausgestaltet, dass das Löschgas in dem Wärmetauscher unter Aufnahme von Wärme des Fluids verdampft. Nach dem Durchlaufen des Wärmetauschers wird das Löschgas bevorzugt wieder dem Löschgastank zugeführt, insbesondere wird es hierbei komprimiert. Das Kühlen des Speichertanks erfolgt also mittels eines Kühlkreiskreislaufs
Zusätzlich oder alternativ kann vorgesehen sein, die Brandschutzeinrichtung, insbesondere ihre Ausbringeinrichtung, zum Ausbringen von Kühlwasser zu verwenden. Das Kühlwasser dient dem Kühlen des Speicherturms gemäß den vorstehenden Ausführungen für das Löschgas. Bevorzugt wird das Kühlwasser also derart ausgebracht, dass der Speicherturm, insbesondere der Speichertank beziehungsweise das in ihm zwischengespeicherte Fluid, zumindest bereichsweise von ihm gekühlt wird. Vorzugsweise läuft das Kühlwasser, wie bereits für das Löschgas beschrieben, außen an dem Speicherturm herunter. Insbesondere erfolgt das Ausbringen des Kühlwassers in Umfangsrichtung um den Speicherturm herum verteilt, insbesondere gleichmäßig verteilt, sodass eine Benetzung von zumindest 50 %, zumindest 60 % oder zumindest 70 % der Außenseite des Speicherturms erzielt ist. Besonders bevorzugt wird das Kühlwasser anschließend wieder aufgefangen und erneut zum Kühlen des Speicherturms verwendet. Es liegt also ein offener Kreislauf vor. Das Auffangen des Kühlwassers erfolgt insbesondere mittels einer Auffangschale, die außenseitig an dem Speicherturm angeordnet ist. Es kann auch vorgesehen sein, einen geschlossenen Kreislauf zu schaffen, indem das Kühlwasser dem bereits erwähnten Wärmetauscher zugeführt wird.

Das Kühlwasser wird insbesondere einem Fluidreservoir entnommen, welches am Fuß des Speicherturms vorliegt. Das Fluidreservoir wird insbesondere von einer von einem Fundament ausgebildeten Wanne gebildet. Das Fluidreservoir ist zudem bevorzugt derart angeordnet und ausgestaltet, dass das an dem Speicherturm herablaufende Kühlwasser in das Fluidreservoir einströmt. Das in dem Fluidreservoir vorliegende Wasser kann insoweit als Kühlwasser verwendet werden. Zusätzlich oder alternativ wird das Wasser zumindest zeitweise zur Elektrolyse herangezogen, um Wasserstoff und Sauerstoff zu erzeugen. Der hierbei anfallende Wasserstoff wird bevorzugt als Fluid in dem Speichertank zwischengespeichert.

Vorzugsweise ist es vorgesehen, dass die Brandschutzeinrichtung sowohl für das Ausbringen des Löschgases als auch für das Ausbringen des Kühlwassers vorgesehen und ausgestaltet ist. Insbesondere erfolgt das Ausbringen des Löschgases mittels der Ausbringeinrichtung und das Ausbringen des Kühlwassers mittels einer weiteren Ausbringeinrichtung, die beide Bestandteil der Brandschutzeinrichtung sind. Wird auf das Leck des Speichertanks erkannt, so ist besonders bevorzugt vorgesehen, mittels der Ausbringeinrichtung den Löschgasvorhang zu erzeugen und gleichzeitig mittels der weiteren Ausbringeinrichtung Kühlwasser auszubringen, welches außen an dem Speicherturm herabläuft. Hierdurch kann besonders effektiv erzielt werden, dass das Fluid nicht in den Schutzbereich gelangt.

Bevorzugt wird das Löschgas in dem Löschgasspeicher mit einem geringeren Druck zwischengespeichert als das Fluid in dem Speichertank. Hierdurch wird eine höhere Stabilität des Speicherturms erzielt, sodass dieser ohne weiteres die Windkraftanlage trägt. Die beschriebene Ausgestaltung der Fluid- und/oder Energiebereitstellungseinrichtung ermöglicht insoweit eine zuverlässige und sichere Zwischenspeicherung des mindestens einen Fluids bei gleichzeitig geringem Platzbedarf, insbesondere eine Zwischenspeicherung des mindestens einen Fluids unter hohem Druck, wobei die Fluidspeichervorrichtung zusätzlich zur Abstützung von Elementen der Fluid- und/oder Energiebereitstellungseinrichtung herangezogen wird, nämlich zumindest der Windkraftanlage.

Insgesamt ist durch die Integration der Windkraftanlage und der Fluidspeichervorrichtung ein besonders ökologischer Betrieb der Fluid- und/oder Energiebereitstellungseinrichtung möglich. Durch die Bereitstellung des wenigstens einen Fluids, insbesondere Wasserstoff, und/oder elektrischer Energie mittels der Fluid- und/oder Energiebereitstellungseinrichtung ergeben sich insbesondere hinsichtlich des Kohlenstoffdioxids Emissionsvorteile gegenüber herkömmlichen Anlagen. Die Kohlenstoffdioxidbilanz der Einrichtung ist daher bereits nach kurzer Zeit positiv, im Sinne einer Verringerung einer Menge des ausgestoßenen Kohlenstoffdioxids.

Eine Weiterbildung der Erfindung sieht vor, dass die Tankanordnung eine erste Tankanordnung, der Speichertank ein erster Speichertank und das Fluid ein erstes Fluid ist, wobei zusätzlich zu der ersten Tankanordnung eine zweite Tankanordnung für ein zweites Fluid vorliegt, die mehrere separat angeordnete zweite Speichertanks aufweist, die in Umfangsrichtung um den Speicherturm verteilt angeordnet, zur Versteifung des Speicherturms an diesem befestigt sind und sich an der Gründung abstützen und/oder an dieser befestigt sind und/oder mehrfach an dem Speicherturm befestigt sind. Die Fluidspeichervorrichtung verfügt also nicht nur über die Tankanordnung, sondern vielmehr über mehrere Tankanordnungen für mehrere Fluide, nämlich über die erste Tankanordnung für das erste Fluid und die zweite Tankanordnung für das zweite Fluid. Die erste Tankanordnung ist zur Zwischenspeicherung des ersten Fluids und die zweite Tankanordnung zur Zwischenspeicherung des zweiten Fluids vorgesehen und ausgebildet. Das erste Fluid ist bevorzugt der Wasserstoff und das zweite Fluid der Sauerstoff. Auch eine umgekehrte Ausgestaltung könnte jedoch grundsätzlich realisiert sein.

Besonders vorteilhaft ist es zudem, das Löschgas als zweites Fluid zu verwenden. In diesem Fall wird also das Löschgas mittels der zweiten Tankanordnung vorgehalten, sodass die zweite Tankanordnung beziehungsweise die zweiten Speichertanks als Löschgasspeicher dienen. Es kann vorgesehen sein, dass die zweite Tankanordnung beziehungsweise ihre zweiten Speichertanks allein den Löschgasspeicher bilden. Es kann jedoch auch vorgesehen sein, dass zusätzlich zu der außerhalb des Speicherturms angeordneten zweiten Tankanordnung ein Löschgastank in dem Speicherturm vorliegt, und dass die zweite Tankanordnung und der Löschgastank gemeinsam den Löschgasspeicher darstellen. Vorzugsweise ist in diesem Fall die Ausbringeinrichtung über den Löschgastank, insbesondere ausschließlich über den Löschgastank und insoweit lediglich mittelbar, strömungstechnisch an die zweite Tankanordnung angeschlossen.

Die erste Tankanordnung weist den ersten Speichertank auf, wie bereits erläutert, vorzugsweise genau einen ersten Speichertank. Das für das erste Fluid von der Fluidspeichervorrichtung insgesamt bereitgestellte Speichervolumen wird also allein mittels des einen ersten Speichertanks bereitgestellt. Die zweite Tankanordnung verfügt hingegen über mehrere separate zweite Speichertanks, sodass das von der Fluidspeichervorrichtung für das zweite Fluid bereitgestellte Speichervolumen von den mehreren zweiten Speichertanks gemeinsam bereitgestellt wird. Beispielsweise entspricht das Speichervolumen der Fluidspeichervorrichtung für das erste Fluid zumindest dem Speichervolumen für das zweite Fluid, bevorzugt ist jedoch das Speichervolumen für das erste Fluid größer als das Speichervolumen für das zweite Fluid. Besonders bevorzugt ist das Speichervolumen für das erste Fluid mindestens 50 %, mindestens 75 % oder mindestens 100 % größer als das Speichervolumen für das zweite Fluid. Beispielsweise entspricht das Verhältnis zwischen dem Speichervolumen für das erste Fluid und dem Speichervolumen für das zweite Fluid dem Volumenverhältnis zwischen dem bei der Elektrolyse anfallenden Wasserstoff und Sauerstoff.

Um die Steifigkeit des Speicherturms zu erhöhen, sind die mehreren zweiten Speichertanks um den Speicherturm verteilt angeordnet und an diesem befestigt. Beispielsweise sind die zweiten Speichertanks jeweils einerseits an dem Speicherturm und andererseits an der Gründung befestigt oder stützen sich zumindest an dieser ab. Durch das Abstützen der zweiten Speichertanks an der Gründung wird die Aufstandsfläche des Speicherturms auf der Gründung deutlich vergrößert. Sind zudem die zweiten Speichertanks an der Gründung befestigt, beispielsweise mittels einer Schraub- oder Bolzenverbindung, so ist eine verbesserte Standfestigkeit des Speicherturms realisiert. Alternativ oder zusätzlich kann es vorgesehen sein, dass die zweiten Speichertanks jeweils mehrfach an dem Speicherturm befestigt sind, insbesondere an voneinander beabstandeten Befestigungsstellen. Hierdurch wird eine deutliche Erhöhung der Steifigkeit des Speicherturms erzielt.

In jedem Fall kann die Befestigung der zweiten Speichertanks an dem Speicherturm stoffschlüssig und/oder formschlüssig erfolgen, beispielsweise durch eine Schweißverbindung und/oder mittels einer Schraub- oder Bolzenverbindung. Insbesondere sind an dem Speicherturm Befestigungsflansche angeschweißt, an welchen die zweiten Speichertanks mittels Schrauben oder Bolzen befestigt sind. Zusätzlich oder alternativ kann es vorgesehen sein, dass zumindest ein Teil der zweiten Speichertanks oder alle zweiten Speichertanks lösbar an dem Speicherturm befestigt sind, insbesondere zu Wartungs- und/oder Inspektionszwecken.

Es wurde bereits darauf hingewiesen, dass der erste Speichertank beispielsweise zur Aufnahme des ersten Fluids unter einem Druck von mindestens 100 bar, mindestens 150 bar, mindestens 200 bar, mindestens 250 bar oder mindestens 300 bar ausgebildet ist. Die zweiten Speichertanks sind vorzugsweise derart ausgebildet, dass sie zur Aufnahme des zweiten Fluids bei demselben Druck geeignet sind. In anderen Worten sollen der erste Speichertank und die zweiten Speichertanks derart ausgestaltet sein, dass das jeweilige Fluid in ihnen mit demselben maximalen Druck vorliegen kann. Insbesondere sind der erste Speichertank und der zweite Speichertank druckfest bis hin zu den genannten Drücken.

Um trotz der vorstehend beschriebenen Abmessungen des Speicherturms in axialer Richtung eine hinreichende Festigkeit des Speicherturms bei gleichzeitig begrenzter Materialstärke des Speicherturms zu erzielen, sind die zweiten Speichertanks zur Versteifung des Speicherturms an diesem befestigt. Bevorzugt sind die zweiten Speichertanks gleichmäßig in Umfangsrichtung verteilt um den Speicherturm angeordnet. Beispielsweise sind wenigstens vier, wenigstens sechs, wenigstens acht oder wenigstens zehn zweite Speichertanks vorgesehen. Die zweiten Speichertanks sind bevorzugt derart an dem Speicherturm angeordnet, dass sie in Umfangsrichtung voneinander beabstandet angeordnet sind, also einander nicht berühren. Mit einer derartigen Ausgestaltung wird eine besonders gute Stützwirkung der zweiten Speichertanks auf den Speicherturm bewirkt.

Die zweiten Speichertanks weisen in axialer Richtung bezüglich der Längsmittelachse des Speicherturms eine Erstreckung auf, welche höchstens 50 %, höchstens 40 %, höchstens 30 %, höchstens 25 % oder höchstens 20 % der Abmessungen des Speicherturms in dieser Richtung entspricht. Zusätzlich oder alternativ beträgt die Erstreckung der zweiten Speichertanks in axialer Richtung mindestes 10 %, mindestens 20 %, mindestens 30 %, mindestens 40 % oder mindestens 50 % der Abmessungen des Speicherturms in dieser Richtung. Beispielsweise beträgt die Erstreckung der zweiten Speichertanks in axialer Richtung also mindestens 10 % und höchstens 50 %, mindestens 20 % und höchstens 40 % oder mindestens 30 % und höchstens 40 % der Abmessungen des Speicherturms in dieser Richtung.

Bevorzugt sind die zweiten Speichertanks im Querschnitt gesehen analog zu dem ersten Speichertank beziehungsweise dem Speicherturm zylindrisch, insbesondere kreiszylindrisch. Besonders bevorzugt sind die zweiten Speichertanks jeweils wenigstens einseitig, insbesondere beidseitig, mit einem kugelkalottenförmigen Deckel beziehungsweise Endstück verschlossen. Hierdurch wird eine hohe Druckfestigkeit der zweiten Speichertanks realisiert. Auch der erste Speichertank kann in axialer Richtung gesehen wenigstens einseitig, bevorzugt beidseitig, mit einem derartigen kugelkalottenförmigen Deckel beziehungsweise Endstück verschlossen sein.

Eine Weiterbildung der Erfindung sieht vor, dass die erste Tankanordnung in axialer Richtung vollständig auf der der Gründung abgewandten Seite der zweiten Tankanordnung vorliegt. Entsprechend liegt im Längsschnitt gesehen keine Überlappung zwischen der ersten Tankanordnung und der zweiten Tankanordnung vor. Vielmehr grenzen sie allenfalls unmittelbar aneinander an. Besonders bevorzugt sind sie jedoch in axialer Richtung voneinander beabstandet. Beispielsweise beträgt der Abstand zwischen der ersten Tankanordnung und der zweiten Tankanordnung in axialer Richtung mindestens 25 %, mindestens 50 %, mindestens 75 % oder mindestens 100 % der maximalen Abmessungen des Speicherturms in radialer Richtung. Zusätzlich oder alternativ kann der Abstand höchstens 200 %, höchstens 175 %, höchstens 150 %, höchstens 125 % oder höchstens 100 % der maximalen Abmessungen in radialer Richtung betragen.

Die beschriebene Anordnung der ersten Tankanordnung und der zweiten Tankanordnung zueinander hat den Vorteil einer weiter verbesserten Steifigkeit des Speicherturms. Ist an dem Speicherturm die Traganordnung für die Solarnutzungseinrichtung angeordnet, so ist es besonders bevorzugt vorgesehen, dass die erste Tankanordnung in axialer Richtung gesehen vollständig auf der der Gründung abgewandten Seite der Traganordnung und die zweite Tankanordnung in axialer Richtung gesehen vollständig auf der der Gründung zugewandten Seite der Traganordnung angeordnet ist. In anderen Worten liegt die Traganordnung in axialer Richtung gesehen zwischen der ersten Tankanordnung und der zweiten Tankanordnung vor. Unter der Traganordnung ist hierbei insbesondere lediglich ein unmittelbar an dem Speicherturm angreifender Teil der Traganordnung zu verstehen, beispielsweise ein den Speicherturm in Umfangsrichtung vollständig umgreifender Tragring der Traganordnung. Eine solche Ausgestaltung ist hinsichtlich der Steifigkeit des Speicherturms besonders vorteilhaft.

Eine Weiterbildung der Erfindung sieht vor, dass die zweiten Speichertanks jeweils an mehreren diskreten Befestigungsstellen oder in axialer Richtung durchgehend an dem Speicherturm befestigt sind. Die Befestigungsstellen sind voneinander beabstandet angeordnet, insbesondere in axialer Richtung. Vorzugsweise liegt zumindest ein Teil der Befestigungsstellen oder liegen alle Befestigungsstellen in der der Gründung abgewandten Hälfte des jeweiligen zweiten Speichertanks vor. Auf diese Art und Weise kann eine besonders zuverlässige und stabile Anbindung an den Speicherturm realisiert werden.

Es kann jedoch auch vorgesehen sein, dass die Befestigungsstellen gleichmäßig in axialer Richtung über einen Großteil des zweiten Speichertanks und des ganzen zweiten Speichertanks verteilt an dem jeweiligen zweiten Speichertank angeordnet sind. Beispielsweise ist eine der Befestigungsstellen an einem ersten Ende des zweiten Speichertanks und eine andere der Befestigungsstellen an einem dem ersten Ende gegenüberliegenden zweiten Ende des zweiten Speichertanks angeordnet. Bezogen auf eine axiale Erstreckung des zweiten Speichertanks ist die eine der Befestigungsstellen beispielsweise höchstens 25 % von einem der Enden des zweiten Speichertanks entfernt angeordnet, die andere der Befestigungsstellen jedoch mindestens 75 % von demselben Ende.

Alternativ kann die Befestigung der zweiten Speichertanks an dem Speicherturm durchgehend ausgebildet sein, also sich über die gesamte Längserstreckung des zweiten Speichertanks oder zumindest einen Großteil der Längserstreckung des zweiten Speichertanks erstrecken. Das Befestigen der zweiten Speichertanks an dem Speicherturm, entweder an den diskreten Befestigungsstellen oder durchgehend, erfolgt besonders bevorzugt mittels einer Stoffschlussverbindung, beispielsweise durch Schweißen oder dergleichen. Die beschriebene Ausgestaltung ermöglicht eine besonders effektive Versteifung des Speicherturms.

Eine Weiterbildung der Erfindung sieht vor, dass von dem Speicherturm beabstandet weitere zweite Speichertanks angeordnet sind, die an den zweiten Speichertanks befestigt sind. Zusätzlich zu den zweiten Speichertanks liegen also weitere zweite Speichertanks vor. Diese sind jedoch in radialer Richtung von dem Speicherturm beabstandet angeordnet, berühren diesen also nicht. Die weiteren zweiten Speichertanks sind an den zweiten Speichertanks befestigt. Beispielsweise ist jeder der weiteren zweiten Speichertanks einerseits an einem der zweiten Speichertanks und andererseits an einem anderen der zweiten Speichertanks befestigt, sodass die zweiten Speichertanks über den weiteren zweiten Speichertank miteinander verbunden, insbesondere aneinander befestigt sind.

Das Befestigen der weiteren zweiten Speichertanks an den zweiten Speichertanks erfolgt beispielsweise stoffschlüssig, insbesondere durch Schweißen, oder formschlüssig, beispielsweise mittels einer Bolzen- und/oder Schraubverbindung. Die weiteren zweiten Speichertanks können in axialer Richtung von der Gründung beabstandet angeordnet sein oder alternativ sich an der Gründung abstützen und/oder an dieser befestigt sein. In jedem Fall wird mittels der weiteren zweiten Speichertanks eine weitere Versteifung der Gesamtanordnung aus Speicherturm und zweiten Speichertanks sowie eine vorteilhafte Gewichtsverteilung erzielt.

Eine Weiterbildung der Erfindung sieht vor, dass die Ausbringeinrichtung einen Düsenring mit einer Vielzahl von Ausbringdüsen aufweist, die strömungstechnisch an den Löschgasspeicher angeschlossen und zur Erzeugung des Löschgasvorhangs angeordnet und ausgestaltet sind. Unter dem Düsenring ist eine ringförmige Anordnung der Ausbringdüsen zu verstehen. Der Düsenring kann beispielsweise kreisringförmig sein. Besonders bevorzugt ist jedoch eine Gestalt des Düsenring vorgesehen, welche an eine Form der Windkraftanlage, insbesondere an eine Form des Maschinengehäuses der Windkraftanlage, formangepasst ist. Der Düsenring kann insoweit auch aus mehreren geraden Bereichen bestehen, welche gegeneinander angewinkelt sind, beispielsweise rechtwinklig zueinander vorliegen. Besonders bevorzugt dient der Düsenring nicht lediglich einer Anordnung beziehungsweise Halterung der Ausbringdüsen, sondern zugleich einer Verteilung des Löschgases auf die Ausbringdüsen. Hierzu ist der Düsenring bevorzugt als Hohlkörper ausgestaltet, über welchen die Ausbringdüsen strömungstechnisch an den Löschgasspeicher angeschlossen sind.

Die Ausbringdüsen dienen dem Ausbringen des Löschgases. Hierbei sind sie derart angeordnet und ausgestaltet, dass das aus ihnen ausströmende Löschgas den Löschgasvorhang ausbildet. Die Anordnung der Ausbringdüsen ist insbesondere derart gewählt, dass der Löschgasvorhang den abzuschirmenden Schutzbereich der Windkraftanlage in wenigstens einer gedachten Ebene durchgehend, also unterbrechungsfrei, umgreift. Sind die Ausbringdüsen beabstandet voneinander angeordnet, so sind sie üblicherweise in einer Richtung, in welcher das Löschgas aus den Ausbringdüsen ausströmt, derart weit von dem Schutzbereich der Windkraftanlage beabstandet, dass das Löschgas bis zum Erreichen des Schutzbereichs den durchgehenden Löschgasvorhang ausbildet. Es kann jedoch auch vorgesehen sein, dass die Ausbringdüsen ineinander übergehen und beispielsweise in Form einer gemeinsamen Ausbringdüse vorliegen, welche umlaufend ausgebildet ist, sodass das Löschgas bereits bei dem Austreten aus den Ausbringdüsen beziehungsweise der gemeinsamen Ausbringdüsen den durchgehenden Löschgasvorhang bildet. Eine derartige Ausgestaltung der Ausbringeinrichtung ermöglicht es, ein Vordringen des Fluids zu dem Schutzbereich der Windkraftanlage besonders effektiv zu unterbinden.

Eine Weiterbildung der Erfindung sieht vor, dass die Windkraftanlage ein Maschinengehäuse aufweist, in welchem wenigstens ein Generator zur Erzeugung der elektrischen Energie angeordnet ist und aus welchem eine wenigstens ein Rotorblatt der Windkraftanlage tragende und antriebstechnisch an den Generator angeschlossene Rotorwelle herausragt, wobei der Düsenring das Maschinengehäuse umgreift. Das Maschinengehäuse nimmt den Generator vollständig auf. Eine Rotor der Windkraftanlage, welcher das wenigstens eine Rotorblatt trägt, ist über die Rotorwelle an den Generator antriebstechnisch angeschlossen. Die Rotorwelle ist in und/oder an dem Maschinengehäuse drehbar gelagert, sodass sie schlussendlich den Rotor und mithin das wenigstens eine Rotorblatt trägt. Der Rotor sowie das Rotorblatt sind vollständig außerhalb des Maschinengehäuses angeordnet. Zusätzlich zu dem Generator kann ein Getriebe in dem Maschinengehäuse vorliegen, über welches die Rotorwelle antriebstechnisch an den Generator angeschlossen ist. Das Getriebe dient insbesondere einer Drehzahlumsetzung, weist also eine von eins verschiedene Übersetzungen auf.

Der Düsenring umgreift das Maschinengehäuse, sodass die Ausbringdüsen um das Maschinengehäuse herum verteilt angeordnet sind. Entsprechend ist mittels der Ausbringeinrichtung der Löschgasvorhang um das Maschinengehäuse und somit um den Generator herum erzeugbar. Es kann vorgesehen dass der Düsenring das Maschinengehäuse in Draufsicht umgreift, jedoch in zumindest einer Richtung von diesem beabstandet ist. Es kann jedoch auch vorgesehen sein, dass der Düsenring in einer gedachten Ebene liegt, welche das Maschinengehäuse schneidet, sodass der Düsenring und das Maschinengehäuse in der zumindest einen Richtung in Überdeckung miteinander vorliegen. Hierdurch wird ein besonders effektiver Brandschutz erzielt.

Eine Weiterbildung der Erfindung sieht vor, dass Normalenrichtungen von Austrittsöffnungen zumindest einiger der Düsen aufeinander zu geneigt sind. Unter den Austrittsöffnungen sind Mündungsöffnungen der Ausbringdüsen zu verstehen, über welche diese in die Außenumgebung einmünden. Durch die Austrittsöffnungen tritt also das Löschgas unmittelbar in die Außenumgebung aus. Jede der Austrittsöffnungen wird von einer gedachten Ebene definiert, welche bevorzugt durchgehend in einem die jeweilige Austrittsöffnung einfassenden Rand liegt beziehungsweise diesen durchgreift. Die jeweilige Normalenrichtung jeder der Austrittsöffnungen steht nun senkrecht auf dieser Ebene und liegt zugleich mittig in der jeweiligen Austrittsöffnung.

Die Normalenrichtungen der Austrittsöffnungen sind zumindest teilweise aufeinander zu geneigt. Das bedeutet, dass das durch die Austrittsöffnung beziehungsweise die Ausbringdüsen austretende Löschgas in wenigstens eine Richtung auf zumindest eine der anderen Ausbringdüsen zu strömt.

Beispielsweise sind die Ausbringdüsen um eine Längsmittelachse des Düsenrings herum angeordnet, besonders bevorzugt gleichmäßig verteilt. Unter der geneigten Ausrichtung der Normalenrichtungen ist nun zu verstehen, dass einige Normalenrichtungen bezüglich der Längsmittelachse oder einer jeweiligen, zu der Längsmittelachse parallelen Geraden angewinkelt sind, also mit ihr einen Winkel einschließen, welcher größer als 0° und kleiner als 180° ist. Vorzugsweise sind die Austrittsöffnung in Richtung der Längsmittelachse geneigt, sodass das aus den Ausbringdüsen ausströmende Löschgas jeweils eine Geschwindigkeitskomponente in Richtung der Längsmittelachse aufweist. Hierdurch wird ein besonders dichter Löschgasvorhang erzielt.

Eine Weiterbildung der Erfindung sieht vor, dass die Normalenrichtungen der Austrittsöffnungen der Ausbringdüsen bezüglich einer Längsmittelachse des Speicherturms in Richtung des Maschinengehäuses ausgerichtet sind, und/oder dass die Normalenrichtungen der Austrittsöffnungen der Ausbringdüsen auf das Maschinengehäuse ausgerichtet sind. Die Ausrichtung der Normalenrichtungen in Richtung des Maschinengehäuses bedeutet üblicherweise, dass die Austrittsöffnungen beziehungsweise die Ausbringdüsen in Richtung der Längsmittelachse geneigt sind, sodass entsprechend die Normalenrichtungen zumindest nicht parallel zu der Längsmittelachse verlaufen. Die Normalenrichtungen weisen insoweit ausgehend von den Austrittsöffnungen in radialer Richtung bezüglich der Längsmittelachse nach innen. Bevorzugt durchgreift die Längsmittelachse des Speicherturms das Maschinengehäuse. Besonders bevorzugt ist das Maschinengehäuse bezüglich der Längsmittelachse mittig oder zumindest in etwa mittig angeordnet. Zusätzlich oder alternativ kann es vorgesehen sein, dass die Normalenrichtungen auf das Maschinengehäuse ausgerichtet sind. Dies bedeutet, dass die auf den Austrittsöffnungen senkrecht stehenden Normalen beziehungsweise Flächennormalen zumindest einiger der Ausbringdüsen, bevorzugt aller Ausbringdüsen, das Maschinengehäuse schneiden. Hierdurch wird eine besonders effiziente Ausgestaltung des Löschgasvorhangs erzielt.

Eine Weiterbildung der Erfindung sieht vor, dass der Löschgasspeicher, insbesondere der Löschgastank, in Richtung des Speichertanks von einer Löschgasspeicherwand und der Speichertank in Richtung des Löschgasspeichers von einer Speichertankwand begrenzt ist, wobei zwischen der Löschgasspeicherwand und der Speichertankwand ein Luftraum ausgebildet ist, sodass der Löschgasspeicher durch den Luftraum von dem Speichertank beabstandet ist. Der Löschgasspeicher beziehungsweise der Löschgastank und der Speichertank grenzen insoweit bevorzugt nicht unmittelbar aneinander an, sondern sind in Richtung der Längsmittelachse des Speicherturms voneinander beabstandet angeordnet. Der Luftraum ist beispielsweise mit der Außenumgebung strömungstechnisch verbunden, bevorzugt permanent, sodass ein Druckausgleich zwischen dem Luftraum und der Außenumgebung erfolgt. Das bedeutet, dass der in dem Luftraum vorliegende Druck zumindest zeitweise kleiner ist als der Druck in dem Speichertank und/oder der Druck in dem Löschgasspeicher.

Die Löschgasspeicherwand trennt den Löschgasspeicher, insbesondere den Löschgastank, strömungstechnisch dicht von dem Luftraum ab. Analog hierzu trennt die Speichertankwand den Speichertank strömungstechnisch dicht von dem Luftraum ab. Es kann vorgesehen sein, dass die Löschgasspeicherwand und die Speichertankwand aneinander anliegen und sich so aneinander abstützen. Hierdurch wird eine besonders hohe Druckfestigkeit des Löschgasspeichers und/oder des Speichertanks erzielt. Alternativ kann es jedoch auch vorgesehen sein, dass die Löschgasspeicherwand und die Speichertankwand in Richtung der Längsmittelachse des Speicherturms voneinander beabstandet angeordnet sind. In diesem Fall liegt in dem Luftraum ein Bauraum vor, in welchem beispielsweise wenigstens eine Leitung oder dergleichen angeordnet sein kann. Die beschriebene Ausgestaltung des Löschgasspeichers und des Speichertanks ermöglicht eine besonders hohe Festigkeit des Speicherturms.

Eine Weiterbildung der Erfindung sieht vor, dass die Löschgasspeicherwand und die Speichertankwand in radialer Richtung nach außen bezüglich der Längsmittelachse des Speicherturms von der jeweils anderen Wand fortgekrümmt sind. Bezüglich des jeweiligen Speichers beziehungsweise Tank sind sie insoweit jeweils konkav ausgestaltet. Die Löschgasspeicherwand und die Speichertankwand liegen bevorzugt als Kugelkalotte beziehungsweise als Hohlkugelabschnitt vor. Auf diese Art und Weise ist eine besonders hohe Druckfestigkeit des Löschgasspeichers und des Speichertanks realisiert.

Eine Weiterbildung der Erfindung sieht vor, dass der Löschgasspeicher, insbesondere der Löschgastank, in Richtung des Speichertanks und der Speichertank in Richtung des Löschgasspeichers von einer gemeinsamen Trennwand begrenzt sind, sodass der Löschgasspeicher beziehungsweise der Löschgastank unmittelbar an den Speichertank angrenzt. Bei einer solchen Ausgestaltung entfallen also die Löschgasspeicherwand und die Speichertankwand, welche separat voneinander ausgestaltet sind. Vielmehr liegt lediglich die gemeinsame Trennwand vor, die den Löschgasspeicher beziehungsweise den Löschgastank unmittelbar von dem Speichertank strömungstechnisch abgrenzt. Einerseits der der Trennwand liegt also unmittelbar der Löschgasspeicher, insbesondere der Löschgastank, und andererseits der Trennwand unmittelbar der Speichertank vor.

Bei einer solchen Ausgestaltung kann ein auf die Trennwand wirkender Differenzdruck zwischen dem Druck in dem Löschgasspeicher und dem Druck in dem Speichertank reduziert werden, sodass unter Umständen eine schwächere Ausgestaltung der Trennwand realisiert werden kann als im Falle der Löschgasspeicherwand und der Speichertankwand, zwischen welchen der Luftraum vorliegt. Es muss jedoch beachtet werden, dass die Druckdifferenz unterhalb eines bestimmten Grenzwerts bleibt, welcher von der Ausgestaltung der Trennwand festgelegt ist. Beispielsweise werden der Druck in dem Löschgasspeicher und/oder der Druck in dem Speichertank derart gesteuert, dass der Differenzdruck stets kleiner als der Schwellenwert ist. Hierdurch kann eine besonders kompakte und leichte Ausgestaltung des Speicherturms realisiert werden.

Eine Weiterbildung der Erfindung sieht vor, dass der Löschgasspeicher, insbesondere der Löschgastank, den Speicherturm in Richtung der Windkraftanlage abschließt. Das bedeutet, dass die Windkraftanlage unmittelbar oberhalb des Löschgasspeichers beziehungsweise des Löschgastanks angeordnet ist und sich insbesondere an dem Löschgasspeicher beziehungsweise dem Löschgastank abstützt. Vorstehend wurde bereits angedeutet, dass der Speicherturm endseitig mit einem Deckel verschlossen ist. Bevorzugt begrenzt dieser Deckel den Löschgasspeicher in Richtung der Windkraftanlage. Der Löschgasspeicher erstreckt sich insoweit vorzugsweise in Richtung der Längsmittelachse des Speicherturms von der Löschgasspeicherwand beziehungsweise der gemeinsamen Trennwand einerseits bis hin zu dem Deckel andererseits. Der Deckel ist wiederum bevorzugt gekrümmt, nämlich in radialer Richtung nach außen auf den Löschgasspeicher zu beziehungsweise von der Windkraftanlage fort. Hierdurch ist eine besonders druckfeste Ausgestaltung des Löschgasspeichers erzielt. Die Windkraftanlage kann sich unmittelbar auf dem Deckel abstützen und/oder an dem Deckel befestigt sein. Bevorzugt ist die bereits erwähnte Stützanordnung für die Windkraftanlage an dem Deckel befestigt. Eine solche Ausgestaltung ermöglicht eine kompakte Ausführung des Speicherturms.

Eine Weiterbildung der Erfindung sieht vor, dass eine Außenhaut des Speichertanks und eine Außenhaut des Löschgasspeichers, insbesondere des Löschgastanks, von einer gemeinsamen Außenhülle des Speicherturms gebildet sind. Die jeweilige Außenhaut begrenzt den Speichertank beziehungsweise den Löschgasspeicher, insbesondere den Löschgastank, in radialer Richtung bezüglich der Längsmittelachse des Speicherturms nach außen. Die Außenhaut ist bevorzugt zylinderförmig, insbesondere kreiszylinderförmig. Sowohl die Außenhaut des Speichertanks als auch die Außenhaut des Löschgasspeichers beziehungsweise des Löschgastanks werden von der gemeinsamen Außenhülle des Speicherturms gebildet. Das bedeutet, dass die Außenhülle des Speicherturms zwischen dem Speichertank und dem Löschgasspeicher beziehungsweise dem Löschgastank durchgehend ausgestaltet ist. Vorzugsweise umgreift die Außenhülle zudem den Luftraum beziehungsweise schließt diesen gemeinsam mit der Löschgasspeicherwand und der Speichertankwand vollständig ein.

Die Außenhülle des Speicherturms ist bevorzugt eine Wand des bereits erwähnten Rohrs beziehungsweise Metallrohrs, aus welchem der Speicherturm vorzugsweise besteht. Zur Ausbildung des Speichertanks und und des Löschgasspeichers werden insoweit bei der Herstellung des Speicherturms lediglich die Löschgasspeicherwand und die Speichertankwand oder alternativ die gemeinsame Trennwand in das die Außenhülle bildende Rohr eingebracht und dort befestigt. Besonders bevorzugt werden die Löschgasspeicherwand und die Speichertankwand beziehungsweise die gemeinsame Trennwand unmittelbar und fluiddicht mit der gemeinsamen Außenhülle verbunden, beispielsweise durch Schweißen. Hierdurch ist zum einen eine hohe Dichtheit sichergestellt und zum anderen wird der Speicherturm kostengünstig und materialsparend realisiert.

Eine Weiterbildung der Erfindung sieht vor, dass der Speicherturm mittels einer Gründung verankert ist und einen sich bis hin zu der Gründung erstreckenden Sockel aufweist, der die Tankanordnung in axialer Richtung bezüglich der Längsmittelachse des Speicherturms von der Gründung beabstandet. Der Speicherturm ist mit der Gründung verbunden. Beispielsweise stützt sich der Speicherturm über einen Tragring an der Gründung ab. Der Tragring ist an dem Speicherturm befestigt, beispielsweise mit ihm verschweißt und/oder verschraubt. Der Tragring ist vorzugsweise in Umfangsrichtung durchgehend an dem Speicherturm ausgebildet, umgreift diesen also vollständig. Die Gründung dient der ortsfesten Anordnung und Befestigung des Speicherturms bezüglich des Untergrunds. Die Gründung weist beispielsweise ein Fundament auf, welches bevorzugt aus Beton besteht. Es kann jedoch alternativ auch ein anderes Material für das Fundament verwendet werden. In jedem Fall stützt sich der Speicherturm über die Gründung, insbesondere über das Fundament, an dem Untergrund ab.

Um eine besonders stabile und dauerfeste Ausgestaltung des Speicherturms zu realisieren, verfügt der Speicherturm über den Sockel, der in axialer Richtung bezüglich der Längsmittelachse des Speicherturms zwischen der Tankanordnung und der Gründung vorliegt. In anderen Worten beabstandet der Sockel die Tankanordnung in axialer Richtung von der Gründung. In dem Sockel liegt ein weiterer Luftraum vor, welcher strömungstechnisch von der Tankanordnung und insbesondere dem Speichertank getrennt ist. Beispielsweise ist der Speichertank in Richtung des weiteren Luftraums von einer weiteren Speichertankwand begrenzt, welche analog zu der bereits beschriebenen Speichertankwand ausgestaltet ist. Beispielsweise ist also der Speichertank einerseits von der Speichertankwand oder der gemeinsamen Trennwand und andererseits von der weiteren Speichertankwand begrenzt.

Der Sockel weist beispielsweise dieselben Querschnittsform und dieselben Querschnittsabmessungen auf wie der Speichertank, insbesondere durchgehend. Beispielsweise ist er kreiszylindrisch. Besonders bevorzugt weitet er sich jedoch in Richtung der Gründung auf und liegt insoweit als Kegelstumpf beziehungsweise Hohlkegelstumpf vor. Eine solche Ausgestaltung ermöglicht eine besonders zuverlässige Abstützung des Speicherturms und realisiert eine große Standfläche.

Der in dem Sockel vorliegende weitere Luftraum steht bevorzugt in Strömungsordnung mit der Außenumgebung, sodass insoweit zwischen der Außenumgebung und dem weiteren Luftraum ein Druckausgleich realisiert ist, vorzugsweise permanent. Eine solche drucklose Ausgestaltung des Speicherturms im Bereich des Sockels vermeidet eine Verringerung der Standfestigkeit des Speicherturms aufgrund des in dem Speichertank vorliegenden hohen Drucks, sodass insgesamt eine hohe Dauerfestigkeit des Speicherturms erzielt wird.

Eine Weiterbildung der Erfindung sieht vor, dass eine strömungstechnisch an den Löschgasspeicher angeschlossene Anschlussleitung zumindest bereichsweise außerhalb des Speicherturms verläuft. Die Anschlussleitung dient beispielsweise einem Befüllen des Löschgasspeichers mit Löschgas und/oder einen Entnehmen des Löschgases aus dem Löschgasspeicher. Bevorzugt verbindet die Anschlussleitung den Löschgasspeicher strömungstechnisch mit einer Anschlusskonsole, welche außerhalb des Speicherturms angeordnet ist und ein strömungstechnisches Anschließen einer Löschgasleitung an die Anschlussleitung ermöglicht. Da das Löschgas eine feuerhemmende Wirkung aufweist ist die Führung der Anschlussleitung außerhalb des Speicherturms, beispielsweise an einer Außenseite des Speicherturms, völlig unproblematisch und zugleich platzsparend.

Eine Weiterbildung der Erfindung sieht vor, dass wenigstens eine strömungstechnisch an den Speichertank angeschlossene Fluidleitung sich durchgehend innerhalb des Sockels bis hin zu der Gründung erstreckt. Die Fluidleitung dient einer Anbindung einer technischen Einrichtung an den Speichertank. Beispielsweise ist über die Fluidleitung eine Elektrolyseeinrichtung an den Speichertank strömungstechnisch angeschlossen, wobei die Elektrolyseeinrichtung zur Durchführung der Elektrolyse dient. Zusätzlich oder alternativ ist über die Fluidleitung die Brennstoffzelle an den Speichertank strömungstechnisch angeschlossen. Ebenfalls kann die Fluidleitung als Entlüftungsleitung ausgestaltet sein und insoweit einem Entlüftet des Speichertanks dienen.

Es kann vorgesehen sein, dass mehrere Fluidleitung vorliegen. Für jede dieser Fluidleitungen gilt jeweils das vorstehend Gesagte. Die Fluidleitung erstreckt sich ausgehend von dem Speichertank durchgehend innerhalb des Speicherturms beziehungsweise des Sockels bis hin zu der Gründung. Bevorzugt greift sie in die Gründung ein. Hierdurch wird eine Anordnung der Fluidleitung außerhalb des Speicherturms vermieden. Dies verhindert ein unmittelbares Austreten des Fluids in die Außenumgebung und insbesondere in Richtung der Windkraftanlage im Falle eines Lecks der Fluidleitung. Insoweit ist ein besonders guter Brandschutz erzielt.

Eine Weiterbildung der Erfindung sieht vor, dass sich der Speicherturm in axialer Richtung bezüglich der Längsmittelachse des Speicherturms in die Gründung hinein erstreckt. Um eine besonders hohe Standfestigkeit des Speicherturms zu erzielen, greift der Speicherturm in die Gründung ein. Das bedeutet, dass der Speicherturm vorzugsweise in axialer Richtung einerseits in den Untergrund, auf oder in welchem die Gründung angeordnet ist, oder zumindest in die Gründung eingreift, und andererseits sich in die von dem Untergrund beziehungsweise von der Gründung abgewandte Richtung erstreckt. Die Gründung kann in oder auf dem Untergrund angeordnet sein, insbesondere umfasst sie das Fundament. Über das Fundament wird eine Gewichtskraft des Speicherturms in den Untergrund eingetragen, insbesondere derart, dass die Gewichtskraft auf eine Fläche des Untergrunds verteilt wird, die größer ist als eine Querschnittsfläche des Speicherturms.

Beispielsweise stützt sich der Speicherturm über eine Stützzarge der Gründung an dem Untergrund ab. Unter der Stützzarge ist zum Beispiel ein hohlzylindrisches, insbesondere hohlkreiszylindrisches Stützteil zu verstehen, in welches der Speicherturm eingreift. Bevorzugt stützt sich der Speicherturm mit dem vorstehend erwähnten Tragring an einer Stirnseite der Stützzarge ab, nämlich auf ihrer dem Untergrund abgewandten Seite. Mit jeder der beschriebenen Ausgestaltungen wird zum einen eine günstige Schwerpunktlage des Speicherturms erzielt. Andererseits ergeben sich weitere Vorteile, auf welche nachfolgend noch eingegangen wird.

Eine Weiterbildung der Erfindung sieht vor, dass die Tankanordnung in axialer Richtung bezüglich der Längsmittelachse des Speicherturms von der Gründung einen Abstand aufweist, der mindestens maximalen Abmessungen des Speicherturms in radialer Richtung entspricht. In axialer Richtung bezüglich der Längsmittelachse des Speicherturms gesehen weist der Speicherturm ausgehend von der Gründung in die von dem Untergrund abgewandte Richtung erste Abmessungen auf, wohingegen der in die Gründung eingreifende Teil des Speicherturms in axialer Richtung zweite Abmessungen aufweist. Gesamtabmessungen des Speicherturms in axialer Richtung setzen sich insoweit aus den ersten Abmessungen und den zweiten Abmessungen zusammen.

Insbesondere ergeben sich die Gesamtabmessungen als Summe der ersten Abmessungen und der zweiten Abmessungen.

Die ersten Abmessungen sind größer als die zweiten Abmessungen, beispielsweise um einen Faktor von mindestens 5, mindestens 7,5, mindestens 10, mindestens 11, mindestens 12, mindestens 13, mindestens 14 oder mindestens 15. Beispielsweise weist der Speicherturm insgesamt in axialer Richtung Abmessungen von mindestens 20 m, vorzugsweise mindestens 25 m oder mindestens 27,5 m auf. Hiervon sind mindestens 5 %, mindestens 7,5 % oder mindestens 10 % in der Gründung und dem Untergrund aufgenommen. Beispielsweise sind wenigstens 2 m des Speicherturms in der Gründung und dem Untergrund angeordnet. Bevorzugt betragen die ersten Abmessungen höchstens 30 m, höchstens 27,5 m oder höchstens 25 m, sodass der Speicherturm maximal um die genannten Werte über die Gründung in die dem Untergrund abgewandte Richtung übersteht.

Um trotz dieser Abmessungen eine hinreichende Festigkeit des Speicherturms bei gleichzeitig begrenzter Materialstärke des Speicherturms zu erzielen, ist die Tankanordnung in axialer Richtung bezüglich der Längsmittelachse des Speicherturms von der Gründung beabstandet angeordnet. Konkret beträgt der Abstand zwischen der Tankanordnung und der Gründung mindestens den maximalen Abmessungen des Speicherturms in radialer Richtung, bezogen auf eine Längsmittelachse des Speicherturms. Unter den maximalen Abmessungen des Speicherturms in radialer Richtung sind die über seine Erstreckung in axialer Richtung größten Abmessungen in radialer Richtung zu verstehen. Beispielsweise liegen die maximalen Abmessungen im Bereich der Gründung vor, insbesondere in der Gründung oder unmittelbar anschließend an die Gründung, also im Bereich des Sockels. Die maximalen Abmessungen sind zum Beispiel der maximale Durchmesser des Speicherturms, insbesondere des Sockels, über seine gesamte Erstreckung in axialer Richtung gesehen.

In jedem Fall ist es also vorgesehen, dass die Tankanordnung im Längsschnitt bezüglich der Längsmittelachse gesehen nicht in Überdeckung mit der Gründung steht, sondern von dieser beabstandet ist, nämlich um den genannten Abstand. Hierdurch wird eine Beanspruchung des Speicherturms durch eine Druckbeaufschlagung durch das wenigstens eine Fluid vermieden, sodass der Speicherturm eine höhere Standfestigkeit aufweist. Besonders bevorzugt ist der Abstand zwischen der Tankanordnung und der Gründung größer als die maximalen Abmessungen des Speicherturms in radialer Richtung, beispielsweise entspricht er mindestens einem ganzzahligen Vielfachen der maximalen Abmessungen. Beispielsweise ist der Abstand um einen Faktor von mindestens 2, mindesten 3, mindestens 4 oder mindestens 5 größer als die maximalen Abmessungen des Speicherturms. In absoluten Werten ausgedrückt beträgt der Abstand zum Beispiel mindestens 10m.

Die Tankanordnung beziehungsweise der Speichertank sind - wie bereits erläutert - in radialer Richtung nach außen unmittelbar von einer Wand des Speicherturms begrenzt, welche auch als Außenhülle des Speichertanks bezeichnet wird. Es ist also nicht vorgesehen, in dem Speicherturm einen von dem Speicherturm verschiedenen Speichertank anzuordnen. Vielmehr wird der Speichertank von dem Speicherturm beziehungsweise dessen Wand zumindest bereichsweise ausgebildet. Die Wandstärke des Speicherturms beträgt vorzugsweise mindestens 15 mm, mindestens 20 mm, mindestens 25 mm, mindestens 30 mm oder - bevorzugt - mindestens 35 mm. Umgekehrt beträgt die Wandstärke höchstens 50 mm, höchstens 45 mm oder höchstens 40 mm. Besonders bevorzugt wird also eine Wandstärke von mindestens 15 mm und höchstens 50 mm, mindestens 20 mm und höchstens 45 mm, mindestens 25 mm und höchstens 40 mm oder mindestens 30 mm und höchstens 40 mm verwendet.

Der Bereich des Speicherturms, der in axialer Richtung gesehen zwischen der Tankanordnung beziehungsweise dem Speichertank und der Gründung beziehungsweise dem Fundament vorliegt, also insbesondere der Sockel, ist drucklos oder zumindest höchstens mit einem Druck beaufschlagt, der geringer ist als der in dem Speichertank vorliegende Druck. Das bedeutet, dieser Bereich strömungstechnisch von der Tankanordnung beziehungsweise dem Speichertank getrennt ist. Beispielsweise liegt in diesem Bereich Luft, insbesondere Umgebungsluft vor. Bevorzugt ist der Bereich strömungstechnisch mit der Außenumgebung des Speicherturms verbunden, sodass zwischen dem Bereich und der Außenumgebung ein Druckausgleich realisiert ist. Entsprechend liegt in dem Bereich beziehungsweise dem weiteren Luftraum der gleiche Druck vor wie in der Au-βenumgebung, der wiederum von dem Druck in dem Speichertank verschieden ist. Beispielsweise beträgt der Druck in dem Bereich höchstens 10 bar, höchstens 5 bar, höchstens 2,5 bar, höchstens 2 bar, höchstens 1,5 bar oder höchstens 1 bar. Auch der Bereich wird in radialer Richtung nach außen von der Wand des Speicherturms begrenzt. Die den Bereich umgreifende Wand weist vorzugsweise die gleiche Wandstärke auf wie die den Speichertank begrenzende Wand. Die beschriebene Ausgestaltung der Fluidspeichervorrichtung ermöglicht eine zuverlässige und sichere Zwischenspeicherung des wenigstens einen Fluids bei gleichzeitig geringem Platzbedarf.

Eine Weiterbildung der Erfindung sieht vor, dass die Gründung wenigstens eine Bodenplatte aufweist, die in radialer Richtung größere Abmessungen aufweist als der Speicherturm. Die Bodenplatte dient der Abstützung des Speicherturms auf dem Untergrund beziehungsweise dem Fundament. Die Bodenplatte liegt hierzu auf dem Untergrund und/oder dem Fundament der Gründung auf. Sie wird von dem Speicherturm in axialer Richtung durchgriffen, wohingegen die zweiten Speichertanks vorzugsweise an der Bodenplatte anliegen. Es kann auch vorgesehen sein, dass die zweiten Speichertanks von der Bodenplatte endseitig verschlossen sind. Die Bodenplatte besteht bevorzugt wenigstens bereichsweise oder sogar vollständig aus Metall. Falls die Bodenplatte dem endseitigen Verschließen der zweiten Speichertanks dient, besteht sie vorzugsweise aus demselben Material wie die zweiten Speichertanks. Die Bodenplatte ist beispielsweise mittels einer formschlüssigen Verbindung, beispielsweise einer Schraubverbindung, an dem Fundament der Gründung befestigt.

Eine Weiterbildung der Erfindung sieht vor, dass der Speicherturm die Bodenplatte durchgreift, sodass auf einer ersten Seite der Bodenplatte ein erster Teil des Speicherturms und auf einer der ersten Seite gegenüberliegenden zweiten Seite der Bodenplatte ein zweiter Teil des Speicherturms vorliegt, wobei der zweite Teil des Speicherturms eine als Mannloch ausgebildete Zugangsöffnung aufweist. In anderen Worten liegt der Speicherturm in axialer Richtung gesehen beiderseits der Bodenplatte vor, sodass er von der Bodenplatte in den ersten Teil und den zweiten Teil aufgeteilt ist. Der erste Teil ist auf der dem Untergrund abgewandten Seite der Bodenplatte angeordnet, wohingegen der zweite Teil ausgehend von der Bodenplatte in den Untergrund eingreift. In dem zweiten Teil des Speicherturms ist die Zugangsöffnung ausgebildet, welche als Mannloch ausgebildet ist. Entsprechend ermöglicht die Zugangsöffnung ein Einsteigen einer Person in den Speicherturm, insbesondere unterhalb des Speichertanks. Beispielsweise mündet die Zugangsöffnung in einen in dem Speicherturm vorliegenden Raum ein, an welchen der Speichertank angrenzt. Die Zugangsöffnung weist für das Einsteigen der Person geeignete Abmessungen auf.

Die Gründung, insbesondere das Fundament, ist derart ausgestaltet, dass die Zugangsöffnung zugänglich ist. Beispielsweise umgreift die Gründung, insbesondere das Fundament, den zweiten Teil des Speicherturms, ist jedoch in radialer Richtung von diesem beabstandet. Entsprechend ist in der Gründung beziehungsweise dem Fundament eine Ausnehmung ausgebildet, in die der Speicherturm hineinragt und insbesondere durchgreift. Beispielsweise ist die Ausnehmung in axialer Richtung gesehen einerseits von dem Fundament der Gründung und andererseits von der Bodenplatte der Gründung begrenzt, welche die Ausnehmung vollständig übergreift und verschließt. Es kann vorgesehen sein, dass sich der Speicherturm in axialer Richtung auf dem Fundament unmittelbar abstützt. Es kann jedoch auch vorgesehen sein, dass das Abstützen des Speicherturms an dem Fundament lediglich mittelbar erfolgt, nämlich beispielsweise über die Bodenplatte. Mit einer derartigen Ausgestaltung wird eine besonders gute Wartbarkeit bei gleichzeitig hoher Stabilität des Speicherturms realisiert.

Eine Weiterbildung der Erfindung sieht vor, dass ein Fundament der Gründung als Wanne ausgestaltet ist und einen Innenbereich aufweist, in dem der Speicherturm angeordnet ist, wobei ein den Innenbereich umgreifender Außenbereich in axialer Richtung gegenüber dem Innenbereich in die der ersten Tankanordnung zugewandte Richtung versetzt ist. Über das Fundament stützt sich der Speicherturm an dem Untergrund ab. Das Fundament ist Bestandteil der Gründung, insbesondere mit der Bodenplatte zusammen. Besonders bevorzugt stützt sich der Speicherturm über die Bodenplatte an dem Fundament und über das Fundament an dem Untergrund ab. Der Speicherturm ist insoweit mittels des Fundaments in dem Untergrund verankert. Hierzu greift das Fundament bevorzugt in den Untergrund ein.

Das Fundament weist mindestens zwei unterschiedliche Bereiche, nämlich den Innenbereich und den Außenbereich auf. An dem Innenbereich stützt sich der Speicherturm ab, wohingegen der Außenbereich nicht unmittelbar mit dem Speicherturm in Verbindung steht. Vorzugsweise ist der Außenbereich ausschließlich über den Innenbereich mit dem Speicherturm verbunden. Sowohl der Innenbereich als auch der Außenbereich sind bevorzugt rund oder mehreckig, insbesondere rechteckig. Hierbei umgreift der Außenbereich den Innenbereich vorzugsweise ringförmig. Beispielsweise sind der Innenbereich und der Außenbereich koaxial zueinander angeordnet, insbesondere zusätzlich koaxial zu dem Speicherturm.

Der Innenbereich weist beispielsweise in radialer Richtung Abmessungen auf, welche um einen Faktor von mindestens 5, mindestens 7,5, mindestens 10, mindestens 12,5 oder mindestens 15 größer sind als die maximalen Abmessungen des Speicherturms in radialer Richtung. Zusätzlich oder alternativ entsprechen die Abmessungen höchstens den maximalen Abmessungen in radialer Richtung multipliziert mit einem Faktor von maximal 20, maximal 17,5 oder maximal 15. Der Innenbereich und der Außenbereich sind in jedem Fall einstückig und materialeinheitlich ausgestaltet. Besonders bevorzugt bestehen sie durchgehend aus Beton, insbesondere aus bewehrtem Beton.

Der Innenbereich und der Außenbereich, insbesondere ihre dem Speicherturm zugewandten Oberflächen, sind in axialer Richtung gegeneinander versetzt. Der Versatz ist derart gewählt, dass das Fundament nach Art einer Wanne ausgestaltet ist. Hierzu ist der Innenbereich beziehungsweise seine Oberfläche gegenüber dem Außenbereich beziehungsweise seiner Oberfläche in die von der Tankanordnung abgewandte Richtung versetzt. Im Längsschnitt gesehen umgreift also der Außenbereich den über den Innenbereich überstehenden Teil des Speicherturms in Umfangsrichtung zumindest teilweise, zumindest durchgehend. Hierdurch kann die Höhe des Speicherturms gegenüber dem Untergrund verringert werden, sodass sich genehmigungsrechtliche Vorteile ergeben können. Besonders bevorzugt ist es vorgesehen, dass eine Nabenhöhe der Windkraftanlage bezüglich des Außenbereichs höchstens 30 m, höchstens 27,5 m oder höchstens 25 m beträgt.

Eine Weiterbildung der Erfindung sieht vor, dass die von dem Fundament ausgebildete Wanne ein Fluidreservoir bildet. Das Fluidreservoir dient der Zwischenspeicherung eines Fluids, beispielsweise des Wassers. Das Wasser wird bevorzugt für die Elektrolyse herangezogen. Hierzu ist das Fluidreservoir strömungstechnisch an eine Elektrolyseeinrichtung zur Durchführung der Elektrolyse angeschlossen. Das Fluidreservoir weist ein Speichervolumen auf, welches bevorzugt mindestens 10 m³, mindestens 25 m³, mindestens 50 m³ oder mindestens 100 m³ beträgt. Beispielsweise beträgt eine Tiefe des Fluidreservoirs mindestens 1 m, mindestens 2,5 m, mindestens 5 m, mindestens 7,5 m oder mindestens 10m.

Die Erfindung betrifft weiterhin ein Verfahren zum Betreiben einer Fluid- und/oder Energiebereitstellungseinrichtung, insbesondere einer Fluid- und/oder Energiebereitstellungseinrichtung gemäß den Ausführungen im Rahmen dieser Beschreibung, die über eine Windkraftanlage sowie eine Fluidspeichervorrichtung verfügt, wobei die Fluid- und/oder Energiebereitstellungseinrichtung mittels zumindest zeitweise von der Windkraftanlage bereitgestellter Energie Wasser durch Elektrolyse in wenigstens ein Fluid aufspaltet und das Fluid mittels der Fluidspeichervorrichtung zwischenspeichert, wobei die Fluidspeichervorrichtung über eine Tankanordnung für das Fluid verfügt, die einen in einem die Windkraftanlage tragenden Speicherturm ausgebildeten Speichertank aufweist. Dabei ist vorgesehen, dass die Fluid- und/oder Energiebereitstellungseinrichtung über eine Brandschutzeinrichtung verfügt, welche einen, insbesondere in und/oder an dem Speicherturm angeordneten, Löschgasspeicher für ein Löschgas und eine Ausbringeinrichtung zur Ausbringung des Löschgases aufweist und die Ausbringungseinrichtung zumindest zeitweise einen Schutzbereich der Windkraftanlage mit dem Löschgas flutet und/oder einen Löschgasvorhang um den Schutzbereich der Windkraftanlage erzeugt.

Auf die Vorteile einer derartigen Vorgehensweise beziehungsweise einer derartigen Ausgestaltung der Fluid- und/oder Energiebereitstellungseinrichtung wurde bereits hingewiesen. Sowohl die Fluid- und/oder Energiebereitstellungseinrichtung als auch das Verfahren zu ihrem Betreiben können gemäß den Ausführungen im Rahmen dieser Beschreibung weitergebildet sein, sodass insoweit auf diese verwiesen wird.

Eine Weiterbildung der Erfindung sieht vor, dass das Fluten des Schutzbereichs und/oder das Erzeugen des Löschgasvorhangs bei einem Erkennen auf ein Leck der Fluidspeichervorrichtung erfolgt. Die Fluidspeichervorrichtung wird einer Leckageüberwachung unterzogen. Beispielsweise ist im Bereich der Fluidspeichervorrichtung mindestens ein auf das Fluid sensitiver Sensor angeordnet. Tritt das Fluid ungewollt aus der Fluidspeichervorrichtung beziehungsweise dem Speichertank aus, so wird das ausgetretene Fluid von dem Sensor erfasst und auf das Leck der Fluidspeichervorrichtung erkannt. Auch andere Arten der Leckageüberwachung beziehungsweise Leckageerkennung können selbstredend realisiert werden. Sobald auf das Leck erkannt wurde, wird der Schutzbereich mit dem Löschgas geflutet und/oder der Löschgasvorhang erzeugt. Hierdurch ist sichergestellt, dass das aus der Fluidspeichervorrichtung ausgetretene Fluid nicht zu einem Brand führen kann, sondern unter Umgehung des Schutzbereichs in der Außenumgebung dissipieren kann. Mithilfe des Flutens beziehungsweise des Erzeugens des Löschgasvorhangs wird insoweit verhindert, dass das ausgetretene Fluid in den Schutzbereich eintritt.

Die in der Beschreibung beschriebenen Merkmale und Merkmalskombinationen, insbesondere die in der nachfolgenden Figurenbeschreibung beschriebenen und/oder in den Figuren gezeigten Merkmale und Merkmalskombinationen, sind nicht nur in der jeweils angegebenen Kombination, sondern auch in anderen Kombinationen oder in Alleinstellung verwendbar, ohne den Rahmen der Erfindung zu verlassen. Es sind somit auch Ausführungsformen als von der Erfindung umfasst anzusehen, die in der Beschreibung und/oder den Figuren nicht explizit gezeigt oder erläutert sind, jedoch aus den erläuterten Ausführungsformen hervorgehen oder aus ihnen ableitbar sind.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Längsschnittdarstellung einer Fluid- und/oder Energiebereitstellungseinrichtung, sowie
- Figur 2: eine schematische Darstellung eines Bereichs einer Windkraftanlage der Fluidund/oder Energiebereitstellungseinrichtung sowie ein Bereich einer dieser zugeordneten Brandschutzeinrichtung.

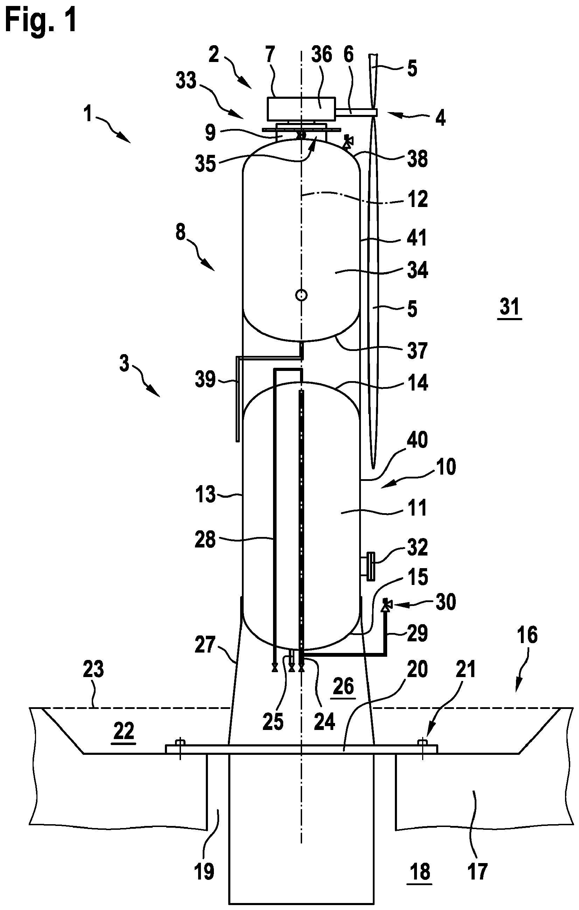

Die Figur 1 zeigt eine schematische Längsschnittdarstellung einer Fluid- und/oder Energiebereitstellungseinrichtung 1. Diese verfügt als wesentliche Bestandteile über eine Windkraftanlage 2 sowie über eine Fluidspeichervorrichtung 3. Die Windkraftanlage 2 weist einen Rotor 4 mit wenigstens einem Rotorblatt 5 auf, in dem hier dargestellten Ausführungsbeispiel mit mehreren Rotorblättern 5. Der Rotor 4 beziehungsweise das wenigstens eine Rotorblatt 5 ist über eine Rotorwelle 6 antriebstechnisch an einen hier nicht erkennbaren Generator angeschlossen, welcher in einem Maschinengehäuse 7 der Windkraftanlage 2 angeordnet ist.

Die Windkraftanlage 2 stützt sich an einem Speicherturm 8 der Fluidspeichervorrichtung 3 ab, beispielsweise über eine Stützanordnung 9. Die Fluidspeichervorrichtung 3 weist eine Tankanordnung 10 mit einem in dem Speicherturm 8 angeordneten Speichertank 11 auf. Vorzugsweise liegt der Speichertank 11 als erster Speichertank 11 vor. In diesem Fall verfügt die Fluidspeichervorrichtung 3 über eine hier nicht dargestellte zweite Tankanordnung mit mehreren zweiten Speichertanks. Es ist erkennbar, dass der erste Speichertank 11 in radialer Richtung bezüglich einer Längsmittelachse 12 des Speicherturms 8 von einer Außenhülle 13 des Speicherturms 8 selbst nach außen begrenzt ist. In axialer Richtung wird der erste Speichertank 11 von einer Speichertankwand 14 und einer weiteren Speichertankwand 15 auf gegenüberliegenden Seiten begrenzt. Die Speichertankwand 14 und die weitere Speichertankwand 15 sind an der Außenhülle 13 des Speicherturms 8 zur Ausbildung des Speichertanks 11 befestigt, bevorzugt stoffschlüssig, insbesondere durch Schweißen.

Der Speicherturm 8 liegt bevorzugt in Form eines zylindrischen, insbesondere kreiszylindrischen Rohr vor. Er ist mittels einer Gründung 16, welche ein Fundament 17 aufweist, in einem Untergrund 18 verankert. Der Speicherturm 8 ist hierbei derart ausgestaltet, dass er in die Gründung 16 hineinragt. Bevorzugt ist das Fundament 17 in radialer Richtung bezüglich der Längsmittelachse 12 des Speicherturms 8 von diesem beabstandet angeordnet, sodass eine Ausnehmung 19 in dem Fundament 17 vorliegt, in welche der Speicherturm 8 endseitig eingreift.

Die Ausnehmung 19 beziehungsweise das Fundament 17 wird von einer Bodenplatte 20 übergriffen, welche vorzugsweise mittels einer Schraubverbindung 21 an dem Fundament 17 befestigt ist. Der Speicherturm 8 ist vorzugsweise an der Bodenplatte 20 befestigt. Insbesondere stützt sich der Speicherturm 8 in axialer Richtung in Richtung des Untergrunds 18 über die Bodenplatte 20 an dem Fundament 17 ab. Zusätzlich oder alternativ sind die zweiten Speichertanks an der Bodenplatte 20 befestigt. Beispielsweise stützen sie sich endseitig an der Bodenplatte 20 ab. In dem hier dargestellten Ausführungsbeispiel ist das Fundament 17 als Wanne ausgestaltet und der Speicherturm 8 in Richtung des Untergrunds 18 gegenüber einer Außenumgebung versetzt. Der Versatz ist hierbei derart gewählt, dass eine Nabenhöhe der Windkraftanlage 2 höchstens einer Höhe entspricht, welche ein vereinfachtes Genehmigungsverfahren möglich macht. Beispielsweise beträgt die Nabenhöhe hierzu maximal 30 m, maximal 27,5 m oder maximal 25 m.

Durch die Ausgestaltung des Fundaments 17 als Wanne liegt ein Fluidreservoir 22 zur Zwischenspeicherung eines Fluids vor. Das Fluidreservoir 22 ist zum Beispiel von einer Abdeckung 23 übergriffen, durch welche der Speicherturm 8 aus dem Fluidreservoir 22 herausragt. Die Abdeckung 23 ist beispielsweise perforiert, sodass Wasser, insbesondere Regenwasser, aus einer Außenumgebung des Speicherturms 8 durch die Abdeckung 23 hindurch in das Fluidreservoir 22 gelangen kann. Das in dem Fluidreservoir 22 zwischengespeichert Fluid wird zumindest zeitweise zum Betreiben der Fluid- und/oder Energiebereitstellungseinrichtung 1 herangezogen. Bevorzugt wird hierbei das Wasser durch Elektrolyse in Wasserstoff und Sauerstoff aufgespaltet. Zusätzlich oder alternativ kann die Elektrolyse jedoch auch mit Wasser durchgeführt werden, welches einem Wassertank und/oder einem öffentlichen Wasserversorgungsnetz entnommen wird.

Der bei der Elektrolyse anfallende Wasserstoff wird in dem ersten Speichertank 11 zwischengespeichert. Zum Zuführen des Wasserstoffs in den ersten Speichertank 11 und zum Entnehmen des Wasserstoffs aus dem ersten Speichertank 11 sind Fluidleitungen 24 und 25 vorgesehen. Diese sind in einem Luftraum 26 angeordnet, welcher in einem Sockel 27 des Speicherturms 8 vorliegt. Bevorzugt ist es vorgesehen, dass die Fluidleitungen 24 und 25 innerhalb des Luftraums 26 beziehungsweise des Sockels 27 bis hin zu der Gründung 16 verlaufen und insbesondere auf der dem Untergrund 18 zugewandten Seite der Bodenplatte 20 aus dem Speicherturm 8 herausgeführt werden. Auf der dem Untergrund 18 abgewandten Seite der Bodenplatte 20 verlaufen die Fluidleitungen 24 und 25 insoweit ausschließlich innerhalb des Speicherturms 8. Entsprechendes gilt für eine weitere Fluidleitung 28, die als Entlüftungsleitung ausgestaltet ist.

Es ist erkennbar, dass von der Fluidleitung 24 eine Fluidleitung 29 abzweigt. Diese endet in einem Sicherheitsventil 30. Das Sicherheitsventil 30 ist derart ausgestaltet, dass es zumindest ein Überschreiten eines maximal zulässigen Drucks durch einen in dem ersten Speichertank 11 vorliegenden Druck verhindert. Bei dem Erreichen oder Überschreiten des maximal zulässigen Drucks öffnet das Sicherheitsventil 30, sodass zumindest ein Teil des in dem ersten Speichertank 11 vorliegenden Wasserstoffs in eine Außenumgebung 31 entweichen kann. Weiterhin kann der erste Speichertank 11 mit einem Wartungszugang 32 versehen sein.

Die - rein optionalen - zweiten Speichertanks sind um den Speicherturm 8 verteilt angeordnet und zu dessen Versteifung an ihm befestigt. Hierzu sind die zweiten Speichertanks beispielsweise in axialer Richtung durchgehend an dem Speicherturm 8 befestigt, insbesondere durch Schweißen. An den zweiten Speichertanks können wiederum weitere zweite Speichertanks befestigt sein, vorzugsweise derart, dass sie beabstandet von dem Speicherturm 8 vorliegen. Das bedeutet, dass die weiteren zweiten Speichertanks lediglich über die zweiten Speichertanks an dem Speicherturm angreifen. Die weiteren zweiten Speichertanks sind optional. Der Speicherturm 8 weist einen Grundkörper auf, an welchem die zweiten Speichertanks befestigt sind und in welchem der erste Speichertank 11 ausgebildet ist.

Um einen besonders sicheren Betrieb der Fluid- und/oder Energiebereitstellungseinrichtung 1 zu ermöglichen, verfügt sie über eine Brandschutzeinrichtung 33. Diese weist einen Löschgasspeicher 34 sowie eine Ausbringeinrichtung 35 auf. Der Löschgasspeicher 34 dient zur Zwischenspeicherung eines Löschgases, beispielsweise von Stickstoff, und liegt hier bevorzugt in Form eines Löschgastanks vor, der in dem Speicherturm 8 angeordnet ist. Die Ausbringeinrichtung 35 ist hingegen zum Ausbringen des Löschgases vorgesehen und ausgestaltet. Das Ausbringen des Löschgases erfolgt durch Flutung eines Schutzbereichs 36, welcher in dem ihr dargestellten Ausführungsbeispiel von einem Innenraum des Maschinengehäuses 7 gebildet ist. Zusätzlich oder alternativ ist die Ausbringeinrichtung 35 zur Erzeugung eines Löschgasvorhangs um den Schutzbereich 36 herum vorgesehen und ausgestaltet.

Der Löschgasspeicher 34 ist in axialer Richtung einerseits von einer Löschgasspeicherwand 38 und andererseits von einem Deckel 38 begrenzt. An den Löschgasspeicher 38 ist strömungstechnisch eine Anschlussleitung 39 angeschlossen, die zumindest bereichsweise außerhalb des Speicherturms 8 verläuft. Weiterhin ist erkennbar, dass der erste Speichertank 11 in radialer Richtung nach außen von einer Außenhaut 40 und der Löschgasspeicher 34 in derselben Richtung von einer Außenhaut 41 begrenzt ist. Die Löschgasspeicherwand 38 ist in axialer Richtung von der Speichertankwand 14 beabstandet angeordnet, sodass zwischen ihnen ein Luftraum ausgebildet ist, der von der Außenhülle 13 des Speicherturms 8 begrenzt ist. Im Übrigen bildet die Außenhülle 13 zudem die Außenhaut 40 und die Außenhaut 41 aus. In anderen Worten 13 werden sowohl der erste Speichertank 11 als auch der Löschgasspeicher 34 von der Außenhülle 13 des Speicherturms 8 begrenzt.

Zusätzlich oder alternativ werden die zweite Tankanordnung beziehungsweise ihren zweiten Speichertanks als Löschgasspeicher 34 verwendet. Der vorstehend beschriebene Löschgastank kann in diesem Fall entweder zusätzlich vorliegen oder vollständig entfallen, sodass der Löschgasspeicher 34 entweder von der zweiten Tankanordnung und dem Löschgastank gemeinsam oder allein von der zweiten Tankanordnung gebildet ist.

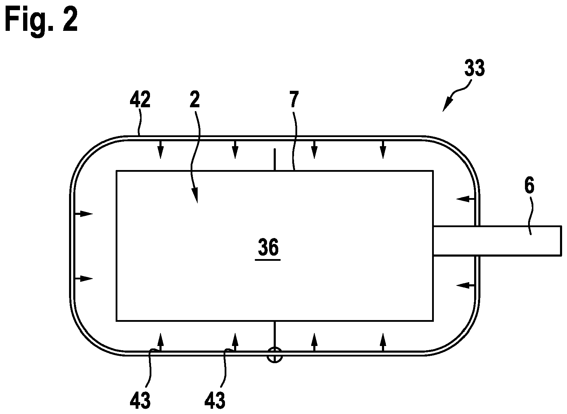

Die Figur 2 zeigt eine schematische Darstellung eines Bereichs der Windkraftanlage 2 und insbesondere einen Bereich der Brandschutzeinrichtung 33. Von der Windkraftanlage 2 ist lediglich das Maschinengehäuse 7 schematisch angedeutet, in welchem sich der Schutzbereich 36 befindet. Es ist erkennbar, dass die Rotorwelle 6 aus dem Maschinengehäuse 7 und mithin dem Schutzbereich 36 herausragt. Von der Brandschutzeinrichtung 33 ist die Ausbringeinrichtung 35 gezeigt, welche in dem hier dargestellten Ausgangsbeispiel über einen Düsenring 42 mit einer Vielzahl von Ausbringdüsen 43 verfügt, von welchen hier lediglich einige beispielhaft gekennzeichnet sind.

Der Düsenring 42 umgreift den Schutzbereich 36 in Umfangsrichtung vollständig. Die Ausbringdüsen 43 sind über den gesamten Umfang verteilt angeordnet. Beispielsweise setzt sich der Düsenring 42 aus mehreren geraden Bereichen zusammen, welche miteinander verbunden sind. An jedem der geraden Bereiche sind einige der Ausbringdüsen 43 angeordnet. Jeweils zwei der geraden Bereiche verlaufen parallel zueinander, wobei sie zu den jeweils anderen geraden Bereichen unter einem Winkel von 90° oder in etwa 90° angeordnet sind. Die Ausbringdüsen 43 sind derart ausgerichtet, dass sie das Löschgas in Richtung des Schutzbereichs 36 ausbringen, nämlich derart, dass sich um den Schutzbereich 36 herum ein durchgehender Löschgasvorhang ausbildet. Dieser Löschgasvorhang dient dem Herumführen von aus dem ersten Speichertank 11 ausgetretenem Wasserstoff um den Schutzbereich 36.

Bevorzugt wird der Löschgasvorhang erzeugt und/oder der Schutzbereich 36 mit dem Löschgas geflutet, sobald auf ein Leck der Fluidspeichervorrichtung 3 und insbesondere des Speichertanks 11 erkannt wird. Hierzu dient beispielsweise ein entsprechender Sensor. Es kann zudem vorgesehen sein, das Fluten des Schutzbereichs 36 und/oder das Erzeugen des Löschgasvorhangs vorzunehmen, sobald das Sicherheitsventil 30 zum Ablassen des Wasserstoffs in die Außenumgebung 31 öffnet. Hierdurch ist sichergestellt, dass der Wasserstoff nicht in den Schutzbereich 36 beziehungsweise nicht in das Maschinengehäuse 7 gelangt. Dort kann es während des Betriebs der Windkraftanlage 2 zur Funkenbildung kommen kann, wodurch es zu einer Entzündung des Wasserstoffs zusammen mit in der Umgebungsluft enthaltenem Sauerstoff kommen könnte. Dies wird mithilfe der Brandschutzeinrichtung 33 zuverlässig vermieden.

### BEZUGSZEICHENLISTE

- 1: Fluid- und/oder Energiebereitstellungseinrichtung
- 2: Windkraftanlage
- 3: Fluidspeichervorrichtung
- 4: Rotor
- 5: Rotorblatt
- 6: Rotorwelle
- 7: Maschinengehäuse
- 8: Speicherturm
- 9: Stützanordnung
- 10: Tankanordnung
- 11: Speichertank
- 12: Längsmittelachse
- 13: Außenhülle
- 14: Speichertankwand
- 15: Speichertankwand
- 16: Gründung
- 17: Fundament
- 18: Untergrund
- 19: Ausnehmung
- 20: Bodenplatte
- 21: Schraubverbindung
- 22: Fluidreservoir
- 23: Abdeckung
- 24: Fluidleitung
- 25: Fluidleitung
- 26: Luftraum
- 27: Sockel
- 28: Fluidleitung
- 29: Fluidleitung
- 30: Sicherheitsventil
- 31: Außenumgebung
- 32: Wartungszugang
- 33: Brandschutzeinrichtung
- 34: Löschgasspeicher
- 35: Ausbringeinrichtung
- 36: Schutzbereich
- 37: Löschgasspeicherwand
- 38: Deckel
- 39: Anschlussleitung
- 40: Außenhaut
- 41: Außenhaut
- 42: Düsenring
- 43: Ausbringdüse

## Patentansprüche

1. Fluid- und/oder Energiebereitstellungseinrichtung, mit einer Windkraftanlage (2) sowie mit einer Fluidspeichervorrichtung (3), wobei die Fluid- und/oder Energiebereitstellungseinrichtung (1) dazu ausgebildet ist, mittels zumindest zeitweise von der Windkraftanlage (2) bereitgestellter Energie Wasser durch Elektrolyse in wenigstens ein Fluid aufzuspalten und das Fluid mittels der Fluidspeichervorrichtung (3) zwischenzuspeichern, wobei die Fluidspeichervorrichtung (3) über eine Tankanordnung (10) für das Fluid verfügt, die einen in einem die Windkraftanlage (2) tragenden Speicherturm (8) ausgebildeten Speichertank (11) aufweist, **dadurch gekennzeichnet, dass** die Fluid- und/oder Energiebereitstellungseinrichtung (1) über eine Brandschutzeinrichtung (33) verfügt, welche einen Löschgasspeicher (34) für ein Löschgas und eine Ausbringeinrichtung (35) zur Ausbringung des Löschgases aufweist und die Ausbringeinrichtung (35) zur Flutung eines Schutzbereichs (36) der Windkraftanlage (2) mit dem Löschgas und/oder zur Erzeugung eines Löschgasvorhangs um den Schutzbereich (36) der Windkraftanlage (2) vorgesehen und ausgestaltet ist.

2. Fluid- und/oder Energiebereitstellungseinrichtung nach Anspruch 1, **dadurch gekennzeichnet, dass** die Ausbringeinrichtung (35) einen Düsenring (42) mit einer Vielzahl von Ausbringdüsen (43) aufweist, die strömungstechnisch an den Löschgasspeicher (34) angeschlossen und zur Erzeugung des Löschgasvorhangs angeordnet und ausgestaltet sind.

3. Fluid- und/oder Energiebereitstellungseinrichtung nach einem der vorhergehenden Ansprüche, **dadurch gekennzeichnet, dass** die Windkraftanlage (2) ein Maschinengehäuse (7) aufweist, in welchem wenigstens ein Generator zur Erzeugung der elektrischen Energie angeordnet ist und aus welchem eine wenigstens ein Rotorblatt (5) der Windkraftanlage (2) tragende und antriebstechnisch an den Generator angeschlossen Rotorwelle (6) herausragt, wobei der Düsenring (42) das Maschinengehäuse (7) umgreift.

4. Fluid- und/oder Energiebereitstellungseinrichtung nach einem der vorhergehenden Ansprüche, **dadurch gekennzeichnet, dass** Normalenrichtungen von Austrittsöffnungen zumindest einiger der Ausbringdüsen (43) aufeinander zu geneigt sind.

5. Fluid- und/oder Energiebereitstellungseinrichtung nach einem der vorhergehenden Ansprüche, **dadurch gekennzeichnet, dass** die Normalenrichtungen der Austrittsöffnungen der Ausbringdüsen (43) bezüglich einer Längsmittelachse (12) des Speicherturms (8) in Richtung des Maschinengehäuses (7) ausgerichtet sind, und/oder dass die Normalenrichtungen der Austrittsöffnung der Ausbringdüsen (43) auf das Maschinengehäuse (7) ausgerichtet sind.

6. Fluid- und/oder Energiebereitstellungseinrichtung nach einem der vorhergehenden Ansprüche, **dadurch gekennzeichnet, dass** der Löschgasspeicher (34) in Richtung des Speichertanks (11) von einer Löschgasspeicherwand (37) und der Speichertank (11) in Richtung des Löschgasspeichers (34) von einer Speichertankwand (14) begrenzt ist, wobei zwischen der Löschgasspeicherwand (37) und der Speichertankwand (14) ein Luftraum ausgebildet ist, sodass der Löschgasspeicher (34) durch den Luftraum von dem Speichertank (11) beabstandet ist.

7. Fluid- und/oder Energiebereitstellungseinrichtung nach einem der vorhergehenden Ansprüche, **dadurch gekennzeichnet, dass** die Löschgasspeicherwand (37) und die Speichertankwand (14) in radialer Richtung nach außen bezüglich der Längsmittelachse (12) des Speicherturms (8) von der jeweils anderen Wand (14, 37) fort gekrümmt sind.

8. Fluid- und/oder Energiebereitstellungseinrichtung nach einem der vorhergehenden Ansprüche, **dadurch gekennzeichnet, dass** der Löschgasspeicher (34) in Richtung des Speichertanks (11) und der Speichertank (11) in Richtung des Löschgasspeichers (34) von einer gemeinsamen Trennwand begrenzt sind, sodass der Löschgasspeicher (34) unmittelbar an den Speichertank (11) angrenzt.

9. Fluid- und/oder Energiebereitstellungseinrichtung nach einem der vorhergehenden Ansprüche, **dadurch gekennzeichnet, dass** der Löschgasspeicher (34) den Speicherturm (8) in Richtung der Windkraftanlage (2) abschließt.

10. Fluid- und/oder Energiebereitstellungseinrichtung nach einem der vorhergehenden Ansprüche, **dadurch gekennzeichnet, dass** eine Außenhaut (40) des Speichertanks (11) und eine Außenhaut (41) des Löschgasspeichers (34) von einer gemeinsamen Außenhülle (13) des Speicherturms (8) gebildet sind.

11. Fluid- und/oder Energiebereitstellungseinrichtung nach einem der vorhergehenden Ansprüche, **dadurch gekennzeichnet, dass** der Speicherturm (8) mittels einer Gründung (16) verankert ist und einen sich bis zu der Gründung (16) erstreckenden Sockel (27) aufweist, der die Tankanordnung (10) in axialer Richtung bezüglich der Längsmittelachse (12) des Speicherturms (8) von der Gründung (16) beabstandet.

12. Fluid- und/oder Energiebereitstellungseinrichtung nach einem der vorhergehenden Ansprüche, **dadurch gekennzeichnet, dass** eine strömungstechnisch an den Löschgasspeicher (34) angeschlossene Anschlussleitung (39) zumindest bereichsweise außerhalb des Speicherturms (8) verläuft.

13. Fluid- und/oder Energiebereitstellungseinrichtung nach einem der vorhergehenden Ansprüche, **dadurch gekennzeichnet, dass** mindestens eine strömungstechnisch an den Speichertank (11) angeschlossene Fluidleitung (24, 24, 28) sich durchgehend innerhalb des Sockels (27) bis hin zu der Gründung (16) erstreckt.

14. Verfahren zum Betreiben einer Fluid- und/oder Energiebereitstellungseinrichtung (1), insbesondere einer Fluid- und/oder Energiebereitstellungseinrichtung (1) nach einem oder mehreren der vorhergehenden Ansprüche, die über eine Windkraftanlage (2) sowie eine Fluidspeichervorrichtung (3) verfügt, wobei die Fluid- und/oder Energiebereitstellungseinrichtung (1) mittels zumindest zeitweise von der Windkraftanlage (2) bereitgestellter Energie Wasser durch Elektrolyse in wenigstens ein Fluid aufspaltet und das Fluid mittels der Fluidspeichervorrichtung (3) zwischenspeichert, wobei die Fluidspeichervorrichtung (3) über eine Tankanordnung (10) für das Fluid verfügt, die einen in einem die Windkraftanlage (2) tragenden Speicherturm (8) ausgebildeten Speichertank (11) aufweist, **dadurch gekennzeichnet, dass** die Fluid- und/oder Energiebereitstellungseinrichtung (1) über eine Brandschutzeinrichtung (33) verfügt, welche einen Löschgasspeicher (34) für ein Löschgas und eine Ausbringeinrichtung (35) zur Ausbringung des Löschgases aufweist und die Ausbringeinrichtung (35) zumindest zeitweise einen Schutzbereich (36) der Windkraftanlage (2) mit dem Löschgas flutet und/oder einen Löschgasvorhang um den Schutzbereich (36) der Windkraftanlage (2) erzeugt.

15. Verfahren nach Anspruch 14, **dadurch gekennzeichnet, dass** das Fluten des Schutzbereichs (36) und/oder das Erzeugen des Löschgasvorhangs bei einem Erkennen auf ein Leck der Fluidspeichervorrichtung (3) erfolgt.
